# EUROPEAN PATENT APPLICATION

(11) **EP 4 425 884 A1**
(43) Date of publication of application: **04.09.2024**
(21) Application number: 23218922.5
(22) Date of filing: 20.12.2023
(51) Int. Cl.: H04L 49/90, H04L 49/9005

(54) **DISTRIBUTED FUNCTION-SPECIFIC BUFFER ARRANGEMENT IN A COMMUNICATION LAYER**

(30) Priority: 01.03.2023 US 202318176930
(71) Applicant: Nio Technology (Anhui) Co., Ltd, Hefei City, Anhui 230601 (CN)
(72) Inventor: HUTKINS, Peter, Scotts Valley, 95066 (US); CHEN, Zhi, Saratoga, 95070 (US); RODRIGUEZ AVILES, Hector, Palo Alto, 94304 (US)
(74) Representative: Vossius & Partner Patentanwälte Rechtsanwälte mbB

(57) **Abstract**

An apparatus, system, and method are provided for a distributed function-specific buffer arrangement in a communication layer. A first module included in the layered communication architecture reserves a buffer in association with communicating a PDU. The buffer is included in a set of buffers allocated in association with the first module. The first module provides the PDU to a second module included in the layered communication architecture. Providing the PDU to the second module includes storing the PDU to the buffer and transferring ownership of the buffer to the second module. The second module accesses the PDU from a memory space associated with the buffer and releases the ownership of the buffer based on successfully accessing the PDU.

## Description

### FIELD

The present disclosure is generally directed to an architecture such as a layered communication architecture or a data pipeline architecture, in particular, toward the transfer of ownership of communication buffers when communicating protocol data units (PDUs) among modules implemented at different layers in the architecture.

### BACKGROUND

Some automotive electronics systems may support a layered communication architecture (e.g., a software architecture such as Automotive Open System Architecture ("AUTOSAR"), etc.) for network communication within a vehicle. For example, a layered communication architecture may support communicating PDUs among modules located in different layers of the layered communication architecture, through a communication layer. Improved techniques for communicating PDUs between modules are desired.

### SUMMARY

A system including a layered communication architecture is described that supports a distributed function-specific buffer arrangement. Each module of the layered communication architecture may reserve a communication buffer for a PDU originating from the module. For example, each module may reserve a set of communication buffers for a respective subset of PDUs originating from the module.

The system may include a buffer library supportive of buffer access and management. At generation time of the buffer library, the system may allocate a buffer pool to the modules of the layered communication architecture. The buffer pool may include a set quantity of communication buffers, and the buffer pool may include subsets of communication buffers (e.g., according to data type and/or buffer size).

Each individual module of the system may own its own source buffers (i.e., communication buffers) for transmitting PDUs to other modules. When transmitting a PDU to another module, the module may transfer ownership of an owned source buffer to the other module. In some cases, when transmitting multiple PDUs to another module, the module may transfer ownership of a set of owned source buffers to the other module. In an example, a module may transfer ownership of or lease a buffer to a second module, and in some cases, the second module may further lease (e.g., sublease) the buffer to an n^{th} module. Aspects of the present disclosure support returning the buffer to the original owner of the buffer.

### BRIEF DESCRIPTION OF THE DRAWINGS

Fig. 1 illustrates an example of a system in accordance with aspects of the present disclosure.
Fig. 2 illustrates an example of a system in accordance with aspects of the present disclosure.
Figs. 3A through 3G illustrate process flows including example operations in accordance with aspects of the present disclosure.
Fig. 4 is a block diagram illustrating an example of a communication environment of the vehicle in accordance with aspects of the present disclosure.
Fig. 5 is a block diagram illustrating an example of a communications subsystem of the vehicle in accordance with aspects of the present disclosure.
Fig. 6 is a block diagram illustrating an example of a computing environment of the vehicle in accordance with aspects of the present disclosure.
Fig. 7 is a block diagram illustrating an example of a computing device associated with one or more components described herein.

### DETAILED DESCRIPTION

Embodiments of the present disclosure will be described in connection with a vehicle system and vehicle network communication.

Some automotive electronics systems may support a layered communication architecture (e.g., a software architecture such as AUTOSAR, etc.) for network communication within a vehicle. For example, a layered communication architecture may support routing (e.g., by a PDU router) PDUs among modules located in different layers of the layered communication architecture, using a communication layer. Some examples of a layered communication architecture include a communication stack (also referred to herein as a COM stack, for example, as implemented in software architectures such as AUTOSAR, etc.) including communication services, communication hardware abstraction, and communication drivers.

In some cases, transmitted and received data (e.g., PDUs) are stored in communication buffers of a buffer library (also referred to herein as a communication buffer library). For example, communication buffers may be used to share transmission and reception data between various internal parts (e.g., a PDU manager, a PDU router, a transport protocol (TP) module, an interface (IF) module, etc.) of the communication stack. In some cases, in a layered communication architecture, communication buffers are used only within the context of the communication stack. For example, communication buffers may support transmission and reception of data between different layers (e.g., a source upper layer, a lower layer, etc.) of the communication stack.

An example is described herein with respect to the perspective of a module (e.g., PDU manager) transmitting a PDU to another module. The other module may be, for example, a communication interface module (e.g., CAN IF, LIN IF, DoIP, etc.). In an example, ownership of a communication buffer may begin when the PDU manager requests the communication buffer from a buffer library for transmitting the PDU. The PDU manager assembles the data to be sent in the communication buffer. The PDU manager may then pass ownership of the communication buffer to a PDU router, and the PDU router may (e.g., in turn) pass ownership of the communication buffer to the communication interface module. The communication interface module maintains ownership of the communication buffer until the communication interface module successfully receives the PDU (e.g., the transmission is successfully completed) and/or successfully processes the PDU, at which time the communication interface module releases the communication buffer. For example, the communication interface module may release the communication buffer to the buffer library.

In another example with respect to the perspective of a module receiving a PDU from another module, in response to the received PDU, the communication interface module may request another communication buffer from the buffer library. The communication interface module may assemble data of a received PDU. Once the entire data of the PDU has been assembled in the communication buffer, the communication interface module passes ownership of the communication buffer to the PDU Router, and the PDU router passes ownership of the communication buffer to an upper-level service (e.g., UDS, PDU manager, etc.) for processing. Once the upper-level service has processed the data of the PDU and no longer needs the buffer space (also referred to herein as a memory space) associated with the communication buffer, the user-level service releases ownership of the communication buffer.

In all cases of communication buffers with multiple owners, or where ownership is passed, aspects of the present disclosure provide a functional safety mechanism that oversees the access and ownership. The functional safety mechanism may monitor sequences of request, use, ownership, and release of a communication buffer. The functional safety mechanism may support detecting instances in which the buffer space associated with a communication buffer is accessed by multiple components within a time-limited period.

According to example aspects of the present disclosure, a system including a layered communication architecture is described that supports a distributed function-specific buffer arrangement. In some aspects, each module (e.g., each upper-level module and each lower-level module) of the layered communication architecture may reserve a communication buffer for a PDU originating from the module. For example, each module may reserve a set of communication buffers for a respective subset of PDUs originating from the module.

The system may include a buffer library supportive of buffer access and management. In some aspects, the size and quantity of buffers that the module may request may be configured by the module at generation time. For example, at generation time of the buffer library, the system may allocate a buffer pool to the module. The buffer pool may include a set quantity of communication buffers, and the buffer pool may include subsets of communication buffers (e.g., according to data type and/or buffer size), aspects of which are later described herein.

Each individual module of the system owns its own source buffers (i.e., communication buffers) for transmitting PDUs to other modules. In some aspects, when transmitting a PDU to another module, the module may transfer ownership of an owned source buffer to the other module. In some cases, when transmitting multiple PDUs to another module, the module may transfer ownership of a set of owned source buffers to the other module. The term "transferring" ownership of a buffer (e.g., an owned source buffer) may include leasing the buffer to another module. In an example, a module may lease a buffer to a second module, and in some cases, the second module may further lease (e.g., sublease) the buffer to an n^{th} module.

In an example, the term "releasing" ownership of a buffer may include returning the buffer to the original owner of the buffer. For example, if the second module releases ownership of the buffer to the original owner (e.g., the first module), the second module returns the buffer to the original owner. In some cases, releasing ownership of the buffer to the original owner includes returning the buffer, even if the buffer is subleased to a 3^{rd} or n^{th} "owner."

Example implementations of the present disclosure are not limited to a layered communication architecture. For example, aspects of the present disclosure described herein (e.g., distributed function-specific buffer arrangement, buffer access and management, buffer library, buffer pool, buffer ownership, etc.) may support implementations in any data architecture such as, for example, a layered communication architecture or a data pipeline architecture.

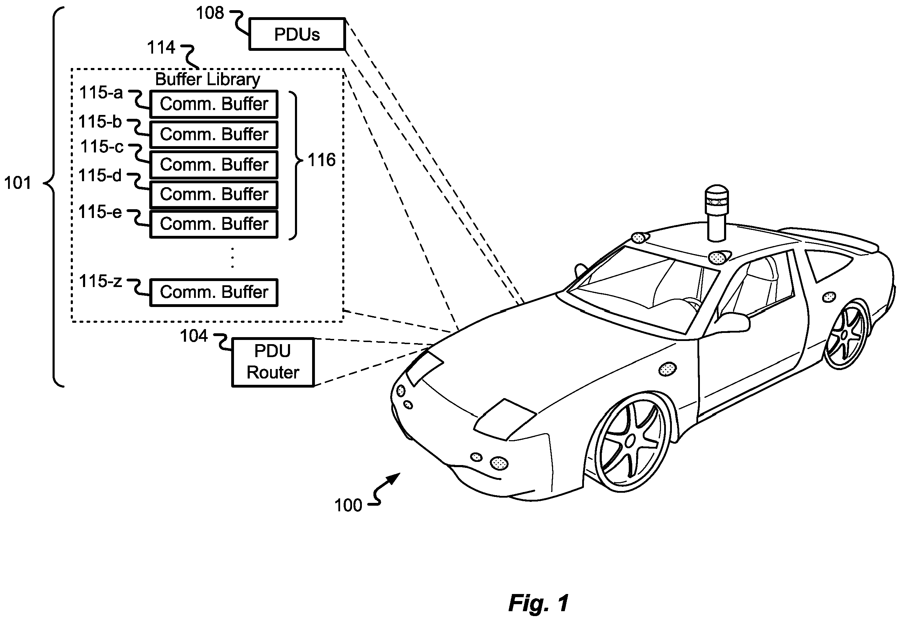

Fig. 1 shows a perspective view of a vehicle 100 in accordance with example aspects of the present disclosure. The vehicle 100 may include one or more interior components (e.g., components inside an interior space, or user space, of a vehicle 100, etc.), exterior components (e.g., components outside of the interior space, or user space, of a vehicle 100, etc.), drive systems, controls systems, structural components, etc.

Although shown in the form of a car, it should be appreciated that the vehicle 100 described herein may include any conveyance or model of a conveyance, where the conveyance was designed for the purpose of moving one or more tangible objects, such as people, animals, cargo, and the like. The term "vehicle" does not require that a conveyance moves or is capable of movement. Typical vehicles may include but are in no way limited to cars, trucks, motorcycles, busses, automobiles, trains, railed conveyances, boats, ships, marine conveyances, submarine conveyances, airplanes, space craft, flying machines, human-powered conveyances, and the like.

In some embodiments, the vehicle 100 may include a number of sensors, devices, and/or systems that are capable of assisting in driving operations, e.g., autonomous or semi-autonomous control. Examples of the various sensors and systems may include, but are in no way limited to, one or more of cameras (e.g., independent, stereo, combined image, etc.), infrared (IR) sensors, radio frequency (RF) sensors, ultrasonic sensors (e.g., transducers, transceivers, etc.), RADAR sensors (e.g., object-detection sensors and/or systems), LIDAR (Light Imaging, Detection, And Ranging) systems, odometry sensors and/or devices (e.g., encoders, etc.), orientation sensors (e.g., accelerometers, gyroscopes, magnetometer, etc.), navigation sensors and systems (e.g., GPS, etc.), and other ranging, imaging, and/or object-detecting sensors. The sensors may be disposed in an interior space of the vehicle 100 and/or on an outside of the vehicle 100. In some embodiments, the sensors and systems may be disposed in one or more portions of a vehicle 100 (e.g., a frame of the vehicle 100, a body panel, a compartment, etc.

According to example aspects of the present disclosure, a network communications system 101 (e.g., a vehicle communications system) is described herein that supports a distributed function-specific buffer arrangement in a communication layer.

The network communications system 101 may include a PDU router 104. The PDU router 104 may support routing of PDUs 108 between various modules (e.g., PDU service modules, transport modules, interface modules, etc.) (also referred to herein as software components) implemented at different layers of a layered communication architecture of the network communications system 101. In some example aspects, the layered communication architecture may be an AUTOSAR layered architecture including a communication stack (e.g., ComStack) capable of facilitating network communication (e.g., vehicle network communication). In some aspects, the layered communication architecture may support communication according to various network protocols (e.g., a controller area network (CAN) communication protocol, a local interconnect network (LIN) communication protocol, Diagnostics over Internet Protocol (DoIP), etc.).

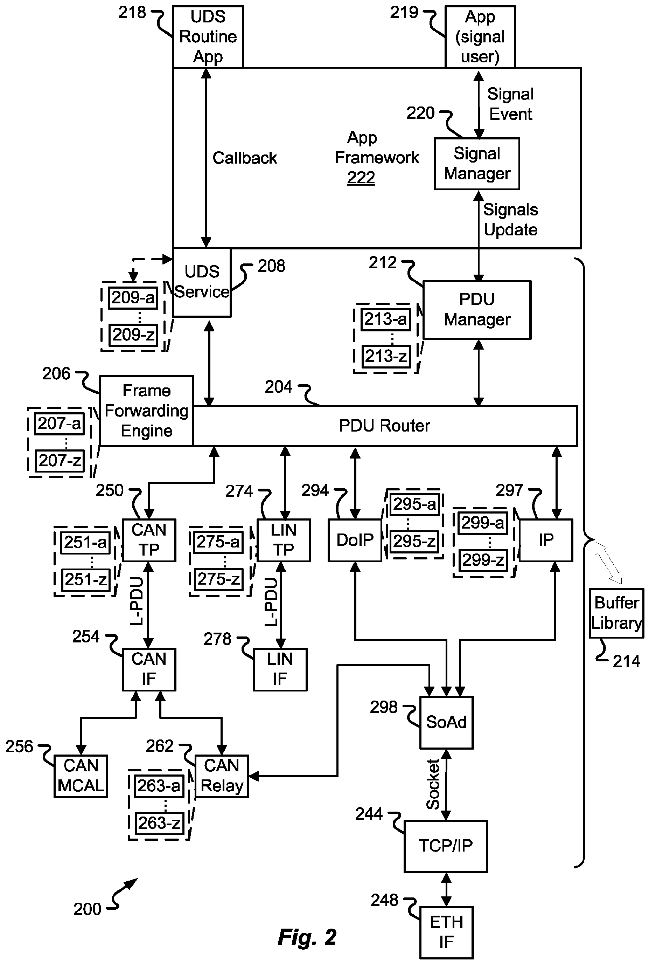

For example, layers included in the layered communication architecture may include an application layer, an application abstraction layer (e.g., supportive of a runtime environment (RTE)), and a basic software (BSW) layer. The BSW layer may include a service layer, a controller (e.g., electronic control unit (ECU)) abstraction layer, a microcontroller abstraction layer (MCAL), and device drivers. Aspects of the present disclosure described herein may be applied to any communications system (e.g., other network communications systems, other vehicle communications systems, etc.). Aspects of an example layered communication architecture and the various layers and modules implemented therein are later described with reference to Fig. 2.

The network communications system 101 may include a buffer library 114 (also referred to herein as a communication buffer library). The buffer library 114 may include a set of communication buffers 115 (e.g., communication buffer 115-a through communication buffer 115-z, where z is an integer value). The network communications system 101 may support allocating respective subsets of the communication buffers 115 (also referred to herein as a buffer pool 116) to each of the various modules (e.g., PDU service modules, transport modules, interface modules, etc.).

The terms "buffer," "communication buffer," and equivalents thereof, are memory areas addressed by buffer addresses. The term "buffer pool," and equivalents thereof, is a data structure which stores buffer addresses corresponding to buffers included in the buffer pool. The data structure includes attributes of the buffer pool (e.g., quantity of memory areas, sizes of each memory area, etc.). The terms "buffer" and "communication buffer" may be used interchangeably herein.

According to example aspects of the present disclosure, the network communications system 101 includes a layered communication architecture and supports a distributed function-specific buffer arrangement. In some aspects, each module (e.g., each upper-level module and each lower-level module) of the layered communication architecture may reserve a communication buffer 115 for a PDU 108 originating from the module. In some aspects, each module may reserve a set of communication buffers 115 for a respective subset of PDUs 108 originating from the module.

The buffer library 114 may support access and management of communication buffers 115. In some aspects, the size and number of communication buffers 115 that a module may request may be fixed according to communication buffers 115 as allocated to the module. For example, at generation time of the network communications system 101 and/or the buffer library 114, the network communication system 101 may allocate a buffer pool 116 including a quantity of communication buffers 115 to the module. The buffer pool 116 may include a set quantity of communication buffers 115 (of one or more buffer sizes).

Each individual module of the network communications system 101 owns its own source buffers (i.e., communication buffers 115) for transmitting PDUs 108 to other modules. In some aspects, when transmitting a PDU 108 to another module, the module may transfer ownership of an owned source buffer to the other module. In some cases, when transmitting multiple PDUs 108 to another module, the module may transfer ownership of a set of owned source buffers (e.g., communication buffers 115) to the other module.

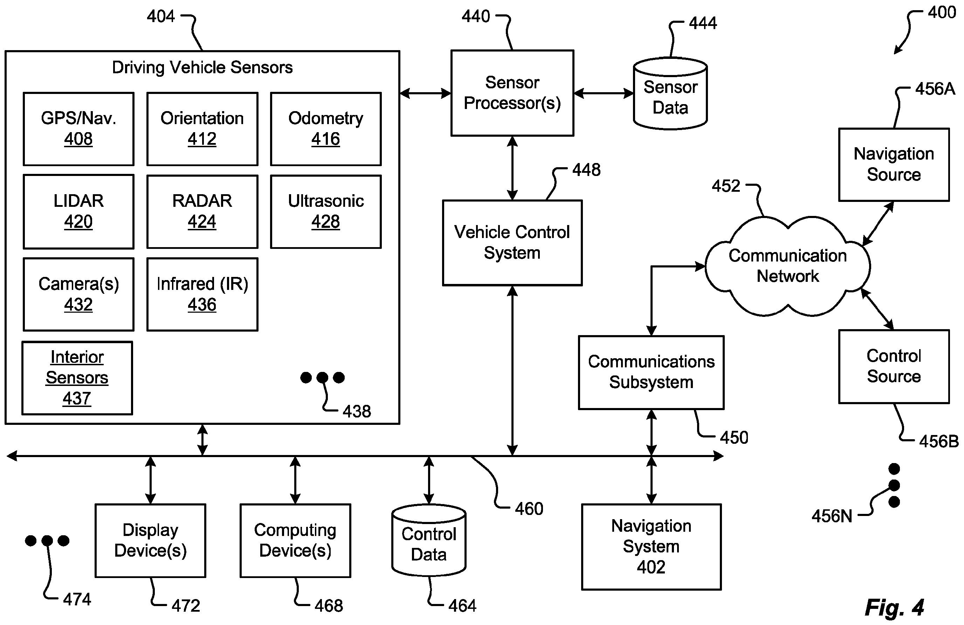

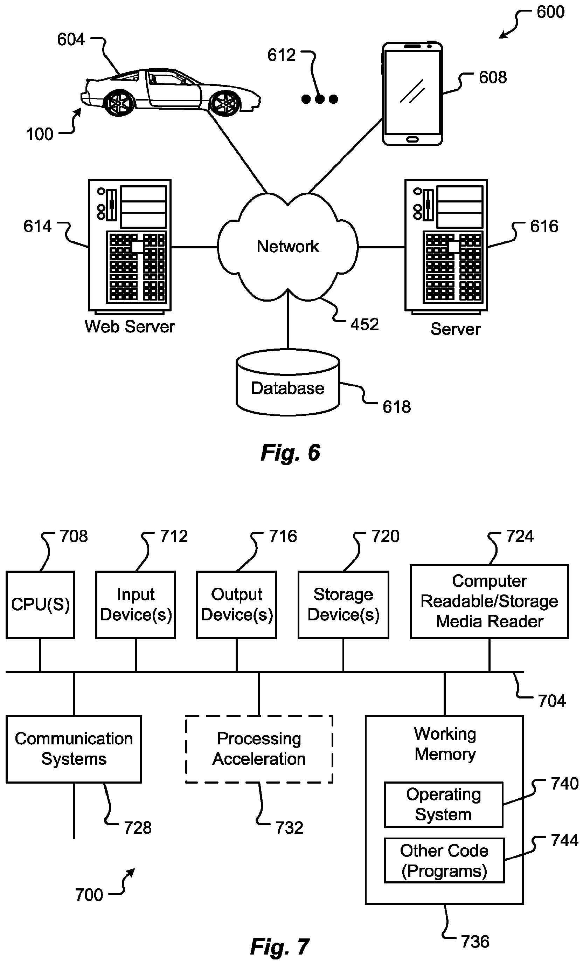

The network communications system 101 (e.g., PDU router 104, buffer library 114, other modules of the layered communication architecture described herein, etc.) may be implemented by aspects of a communications system 400 (later described with reference to Fig. 4), vehicle computing device 604 (later described with reference to Fig. 6), and/or a computer system 700 (later described with reference to Fig. 7). Aspects of buffer library 114 may be implemented at a database (e.g., database 618 later described with reference to Fig. 6) and/or a memory (e.g., storage device(s) 720 later described with reference to Fig. 7).

Fig. 2 illustrates an example of a system 200 that supports a distributed function-specific buffer arrangement in a communication layer in accordance with aspects of the present disclosure. The system 200 may be an example of the network communications system 101 described with reference to Fig. 1. For example, the system 200 may include a layered communication architecture described herein. Example aspects of elements and/or features of the system 200 may include aspects of like elements described with reference to Fig. 1.

In an example, the system 200 may include a PDU router 204 (also referred to herein as a router module), one or more PDU service modules (e.g., UDS service module 208, PDU manager 212, etc.), and one or more applications (e.g., UDS routine application 218, application 219, etc.). The PDU router 204 and the PDU service modules may be included in the service layer of the layered communication architecture. In some aspects, the system 200 may be referred to as a vehicle operating system (VOS), and the PDU router 204 may be referred to as a VOS PDU router.

The system 200 may support communication using a various communication protocols. For example, the system 200 may support a CAN communication protocol, a LIN communication protocol, and/or DoIP, but is not limited thereto. For example, the system 200 may support other protocols suitable for communications supported by the system 200.

The system 200 may include a CAN TP module 250, a CAN IF module 254, a CAN MCAL module 256, and CAN relay module 262. The system 200 may include a LIN TP module 274 and a LIN IF module 278. The system 200 may include a DoIP module 294 and an IP module 297 (associated with a communication protocol supported by the system 200). The system 200 may include a TCP/IP module 244 (e.g., a socket based TCP/IP stack), an Ethernet IF (ETH IF) module 248, and a socket adapter (SoAd) module 298.

The PDU router 204 may receive PDUs from transport modules (e.g., CAN TP module 250, LIN TP module 274, DoIP module 294, etc.) and interfaces (e.g., CAN IF module 254, LIN IF module 278, ETH IF module 248, etc.) of the layered communication architecture and route the PDUs based on respective PDU identifiers.

The PDU router 204 may include a frame forwarding engine 206 supportive of forwarding data frames associated with transport protocols (e.g., CAN TP, LIN TP, DoIP, Serial Peripheral Interface (SPI), other synchronous serial communication protocols, etc.) supported by the system 200. The PDU router 204 may include a transmission module (not illustrated) and a reception module (not illustrated). Each of the elements (e.g., PDU router 204, UDS service module 208, PDU manager 212, etc.) of the system 200 described herein may include a transmission module and a reception module.

Unified Diagnostic Services (UDS) is a diagnostic communication protocol used in electronic control units (ECUs) within automotive electronics. The UDS service module 208 is included at a service layer of the system 200 for diagnostics. The UDS service module 208 may provide callbacks or diagnostics calls to the UDS routine application 218. The UDS routine application 218 may be located at an upper layer stack of the system 200. Communication buffers 209 (e.g., communication buffer 209-a through communication buffer 209-z) may be allocated to the UDS service module 208 in association with transmitting PDUs. The communication buffers 209 may also be referred to as UDS TX communication buffers 209.

The PDU manager 212 (also referred to herein as a manager module) may receive PDUs, for example, from a lower layer module (e.g., PDU router 204, CAN TP module 250, LIN TP module 274, DoIP module 294, IP module 297, etc.). The PDU manager 212 may parse and break up received PDUs into data signals. The PDU manager 212 may generate signal events based on the data signals. In some aspects, the PDU manager 212 may provide the signal events to the signal manager 220 in association with updating corresponding signal values. In some aspects, the PDU manager 212 may provide a signal update to the signal manager 220, and the signal manager 220 may provide data indicative of a signal event to the application 219.

The buffer library 214 may include a set of communication buffers. The system 200 may support allocating a respective subset of the communication buffers (also referred to herein as a buffer pool) to each of the various modules of the layered communication architecture. For example, the system 200 may allocate buffers 207 (e.g., buffer 207-a through buffer 207-z) (also referred to herein as FFE buffers) to the frame forwarding engine 206. In some examples, the system 200 may allocate buffers 213 (e.g., buffer 213-a through buffer 213-z) to the PDU manager 212. In another example, the system 200 may allocate buffers 251 (e.g., buffer 251-a through buffer 251-z) (also referred to herein as RX buffers 251) to the CAN TP module 250, allocate buffers 275 (e.g., buffer 275-a through buffer 275-z) to the LIN TP module 274, allocate buffers 295 (e.g., buffer 295-a through buffer 295-z) to the DoIP module 294, and allocate buffers 299 (e.g., buffer 299-a through buffer 299-z) to the IP module 297. In another example, the system 200 may allocate buffers 263 (e.g., buffer 263-a through buffer 263-z) to the CAN relay module 262. Buffers 263 may include separate pools of RX buffers and TX buffers assigned to the CAN relay module 262. The allocated buffers are examples, and aspects of the present disclosure support allocating buffers of the buffer library 214 to the PDU manager 212, the PDU router 204, and/or any other modules (e.g., CAN TP module 250, CAN IF module 254, CAN MCAL module 256, etc.) described herein.

The buffers (e.g., buffers 207, buffers 213, etc.) of the buffer library 214 may support the exchange of data among suitable modules (e.g., PDU manager 212, PDU router 204, CAN TP module 250, etc.) and/or interfaces (e.g., CAN IF module 254, LIN IF module 278, etc.) of the system 200. For example, the buffers may support the transmission and/or reception of data by the modules and/or interfaces. In some aspects, for a buffer allocated to a module, the module may transfer ownership of the buffer to another module when transmitting data to the other module. In some aspects, the module may provide a pointer to the other module, and the pointer may include an address of the buffer within a memory space.

Aspects of the interaction of the transmission and/or reception of data (and the transfer/release of buffer ownership) may be implemented between two modules of the layered communication architecture and/or a chain of modules having three or more modules. For example, aspects of the present disclosure support implementations of the transmission and/or reception of data (and the transfer/release of buffer ownership) described herein between the PDU router 204 and the CAN TP module 250, between the PDU router 204 and the CAN IF module 254 (e.g., via the CAN TP module 250), or the like.

The system 200 may include a safety manager module (not illustrated). Example aspects of the safety manager module are later described herein with reference to buffer management and the buffer library 214.

The system 200 may include a UDS routine application 218. The UDS routine application 218 may support communication with ECUs for which UDS services are enabled. In an example, the ECUs may be installed in the system 200 (e.g., vehicle 100). In some aspects, the UDS routine application 218 may include a diagnostic application. The system 200 may support implementing operations of the UDS routine application 218 without buffers of the buffer library 214.

The system 200 may include an application framework 222. The application framework 222 may be a software library providing a structure that supports the development of an application (e.g., UDS routine application 218, application 219, etc.) associated with the system 200. For example, the application framework 222 may provide a skeletal support to build an application (e.g., UDS routine application 218, application 219, etc.). The system 200 may support implementing operations of the application without buffers of the buffer library 214.

The application framework 222 may include a signal manager 220. The signal manager 220 may receive PDUs containing data signals. The signal manager 220 may receive PDUs from other modules (e.g., PDU router 204, CAN TP module 250, etc.) of the layered communication architecture. In some aspects, the signal manager 220 may parse the signals, update values corresponding to the signals, and generate events for the application 219 and components using the signals. The signal manager 220 may include accessors and signal-related services.

The CAN TP module 250 provides services for segmentation, transmission with flow control, and reassembly of messages. In some aspects, the CAN TP module 250 may support transmitting and receiving messages that may or may not fit into a single CAN frame. The CAN TP module 250 may be included in the service layer of the layered communication architecture. The CAN TP module 250 may receive data traffic (e.g., PDUs) at a receiver interface (not illustrated).

The CAN IF module 254 assists in the hardware abstraction of the system 200. In some cases, the CAN IF module 254 is responsible for services like transmit request, controller mode control etc. In some aspects, the CAN IF module 254 carries out all hardware independent tasks related to the flow of data to upper layer modules of a CAN stack. The CAN IF module 254 may be included in the controller (ECU) abstraction layer of the layered communication architecture.

The CAN MCAL module 256 is part of the MCAL layer of the layered communication architecture. Along with a CAN MCAL driver (not illustrated) the CAN MCAL module 256 provides hardware access to upper layer services and a hardware-independent interface to the upper layers.

The LIN TP module 274 may support the transport of diagnostic service requests and responses. The LIN TP module 274 may support services for segmentation, transmission with flow control, and reassembly of messages. The LIN TP module 274 may be included in the service layer of the layered communication architecture.

The LIN IF module 278 connects to the PDU Router 204 and/or alternative modules above the LIN IF module 278 for transmission and reception of frames. In some aspects, the LIN IF module 278 is responsible for the copying of the data of the frames for reception and transmission. The LIN IF module 278 may be included in the controller (ECU) abstraction layer of the layered communication architecture.

DoIP facilitates the use of automotive diagnostic services exposed through UDS over TCP/IP on an Ethernet network. The DoIP module 294 may be an operating system independent software module which may support transmission of communications amongst components (e.g., devices, applications, etc.) internal and/or external to the system 200, using IP. For example, the system 200 may support communications using DoIP, including ETH IF module 248, a TCP/IP module 244 (e.g., a socket based TCP/IP stack), the SoAd module 298, and the DoIP module 294. The DoIP module 294 may generate DoIP sockets, process payloads received, and call the UDS service module 208 to handle requests.

The SoAd module 298 creates an interface between the PDU router 204 and the TCP/IP module 244. The SoAd module 298 may map I-PDU identifiers to socket connections and vice versa. In some cases, the SoAd module 298 may receive UDP messages or TCP streams and convert the same into PDUs compatible with the system 200 (e.g., compatible with the PDU router 204, other modules of the system 200, etc.).

The SoAd module 298 may generate and handle socket connections. The SoAd module 298 may support, by a client, creating sockets, accepting connections, reading of sockets, and writing to socket connections independently. A socket, for example, is a communications connection point (endpoint) that may be named and addressed in a network (e.g., network communications system 101, system 200).

The system 200 may include a network manager (not illustrated). The network manager may instruct interfaces when to enable/disable corresponding buses. The network manager may interact with state machines (not illustrated) of each interface.

In some aspects, the system 200 may include other transport modules, interfaces (also referred to herein as interface modules), drivers (e.g., communication drivers, bus drivers, etc.) other than those in the examples illustrated herein.

Example implementations supported by the system 200 of utilizing communication buffers as the vehicle for exchanging data are described herein. The example aspects may be implemented at all modules and/or interfaces of the layered communication architecture of the system 200. For example, the example aspects may be implemented by upper-level modules and/or lower-level modules of the layered communication architecture. In an example, the first module may be an upper-level module or a lower-level module, and the second module may be another upper-level module or another lower-level module. The example aspects described herein may be implemented at any or each of the UDS service module 208, PDU manager 212, PDU router 204, CAN TP module 250, CAN IF module 254, CAN MCAL module 256, CAN relay module 262, LIN TP module 274, LIN IF module 278, DoIP module 294, and IP module 297.

In an example, a first module (e.g., CAN TP module 250) included in the layered communication architecture may reserve a buffer 251-a in association with communicating a PDU. The first module may request the buffer 251-a from the buffer library 214. In some aspects, the buffer 251-a is included in a buffer pool of buffers 251 allocated (e.g., pre-allocated) in association with the first module. Reserving the buffer 251-a includes acquiring the ownership of the buffer 251-a from the buffer library 214. In some aspects, the quantity of the buffers 251 is equal to a maximum quantity of PDUs that are simultaneously receivable and/or transmittable at the first module.

The first module may provide the PDU to a second module (e.g., LIN TP module 274) included in the layered communication architecture. In providing the PDU to the second module, the first module may store the PDU to the buffer 251-a. For example, the first module may assemble data of the PDU (e.g., data to be transmitted) in the buffer 251-a.

The first module may then transfer ownership of the buffer 251-a to the second module. In an example of transferring ownership, the first module may provide pointer information to the second module. The pointer information may indicate an address of the buffer 251-a. The address may be an indication of a memory space associated with the buffer 251-a. The memory space may be included in a set of memory spaces managed in association with the buffer library 214.

In some aspects, the first module may provide an indication of valid data included in the buffer 251-a. In an example, the valid data includes the PDU. For example, the buffer 251-a is a structure that points to the absolute limits (e.g., window size) of the buffer 251-a itself, as well as the valid data within the buffer 251-a. Accordingly, for example, transferring ownership of the buffer 251-a may include indicating permissions for accessing and/or modifying any of the data included within the limits (e.g., window) of the buffer 251-a. In some aspects, the safety manager module may set, modify, enable, or disable the permissions.

The second module may receive the PDU via the buffer 251-a. In an example of receiving the PDU, the second module may access or receive the PDU from the memory space associated with the buffer 251-a. In some aspects, the second module may release the ownership of the buffer 251-a based on successfully accessing, receiving, and/or processing the PDU. For example, the second module may release the buffer 251-a back to the buffer library 214. In an example, the second module may release the buffer 251-a back to the buffer pool of buffers 251.

The first module may transfer the ownership to the second module, provide the pointer information to the second module, and/or provide the indication to the second module via the PDU router 204. For example, the first module may transfer ownership of the buffer 251-a to the PDU router 204, and the PDU router 204 may (e.g., in turn) transfer ownership of the buffer 251-a to the second module. Accordingly, for example, the system 200 may support the transmission of the PDU from the first module to the second module via the transfer of ownership of the buffer 251-a (and the corresponding pointer information and indication of valid data as provided with respect to the transfer of ownership).

In some other aspects, the second module (e.g., LIN TP module 274) may reserve a buffer 275-a in association with communicating another PDU. The second module may request the buffer 275-a from the buffer library 214. In some aspects, the buffer 275-a is included in a buffer pool of buffers 275 allocated (e.g., pre-allocated) in association with the second module. Reserving the buffer 275-a includes acquiring the ownership of the buffer 275-a from the buffer library 214. In some aspects, the quantity of the buffers 275 is equal to a maximum quantity of PDUs that are simultaneously receivable and/or transmittable at the second module.

The second module may provide the PDU to the first module according to the example aspects described herein in association with the first module providing a PDU to the second module. For example, the second module may store the PDU to the buffer 275-a. For example, the second module may assemble data of the PDU (e.g., data to be transmitted) in the buffer 275-a. The second module may transfer ownership of the buffer 275-a to the first module. The first module may access the PDU from a memory space associated with the buffer 275-a. The first module may release ownership of the buffer 275-a in response to successfully accessing, receiving and/or processing the PDU.

Accordingly, for example, the system 200 and the buffer library 214 may support directional ownership of a communication buffer from an origin point to a consumption point (e.g., directional ownership of buffer 251-a from the first module to the second module, directional ownership of buffer 275-a from the second module to the first module) in association with communicating a PDU, in which the communication buffer is released back to the buffer library 214 in response to successful transmission and reception of the PDU using the communication buffer. In some alternative and/or additional aspects, the system 200 and the buffer library 214 may support bi-directional ownership of the same communication buffer (e.g., recycling of the same communication buffer) for communications between an origin point and a consumption point, example aspects of which are later described in the below example implementations.

The system 200 may support exclusivity between different buffer pools. Further, each buffer pool may include multiple subsets of buffers, and the buffer size for each subset may be based on traffic type. Example aspects described herein with respect to buffer exclusivity and subsets of buffers may be applied to any suitable module or interface of the layered communication architecture described herein.

In an example, the system 200 may allocate buffers 251 for CAN TP traffic (e.g., buffers 251 are reserved for CAN TP data traffic) and may allocate buffers 275 for LIN TP traffic (e.g., buffers 275 are reserved for LIN TP data traffic). Buffers 251 may include buffer 251-a through buffer 251-l that may each be 8 bytes in size and allocated for receiving general (e.g., simple) CAN traffic. Buffers 251 may include buffer 251-m and buffer 251-n that may each be 128 bytes in size and allocated for receiving CAN TP traffic. In some other aspects, buffers 251 may include a buffer 251-o that is 16 bytes in size and allocated for receiving a specific type of CAN TP traffic (e.g., a target type of CAN TP traffic).

In some aspects, the CAN TP module 250 may identify at the receiver interface whether an incoming data packet (e.g., an incoming CAN data packet) is CAN TP packet or a general CAN packet. In an example, if the CAN TP module 250 determines the incoming CAN data packet is a general CAN packet (e.g., less than or equal to 8 bytes in size), the CAN TP module 250 may reserve one of 251-a through buffer 251-1 for receiving the data associated with the general CAN packet (e.g., general CAN traffic). In another example, if the CAN TP module 250 determines the incoming CAN data packet is CAN TP traffic of a first type and/or first size (e.g., less than or equal to 128 bytes), the CAN TP module 250 may reserve one of 251-m and buffer 251-n for receiving the data associated with the CAN TP packet (e.g., CAN TP traffic). In some cases, if the CAN TP module 250 determines the incoming CAN data packet is CAN TP traffic of a second type and/or second size (e.g., greater than 8 bytes and up to 16 bytes), the CAN TP module 250 may reserve buffer 251-o for receiving the data associated with the CAN TP packet.

Accordingly, for example, the system 200 may support optimal memory usage and management with respect to the buffer library 214 by differentiating between data packets. For example, aspects of the present disclosure support refraining from consuming buffer 251-m and buffer 251-n (e.g., 128 byte buffers) for general CAN traffic (e.g., CAN data packets of 8 bytes or less). The exclusivity between buffers 251 of the same buffer pool (e.g., through the different subsets within the buffer pool) prevents interference between interfaces for buffer resources. Further, the exclusivity between buffers of different buffer pools prevents interference between interfaces for buffer resources.

The safety manager module may monitor sequences of request, use, ownership, and release of buffers (e.g., buffers 251, buffers 275, buffers 295, etc.) of the buffer library 214. The functional safety mechanism may support detecting instances in which the buffer space associated with a buffer is accessed by multiple components (e.g., different modules described herein) within a temporal duration. In an example, the safety manager module may monitor reservation activity associated with the buffer (e.g., reservations of the buffer in association with transmitting or receiving data), usage of the buffer (e.g., access of data stored at the buffer, modification of data stored at the buffer, etc.), ownership of the buffer (and ownership transfer), release of the buffer, and temporal information associated with accessing the buffer. In some aspects, each of the multiple components (e.g., different modules described herein) has a client identifier that is used to request, access, and release a buffer. Accordingly, for example, the safety manager module may identify client identifiers in association with managing and monitoring reservation activity by modules corresponding to the client identifiers, in association with the buffer, usage of the buffer, ownership of the buffer (and ownership transfer), release of the buffer, and temporal information associated with accessing the buffer.

A first example implementation is described herein in association with a UDS response generated (e.g., composed) by the UDS service module 208. To compose a UDS Response, the UDS service module 208 requests a UDS transmit buffer (e.g., buffer 209-a) from its own local set of transmit buffers (e.g., buffers 209, or a subset of buffers 209). The quantity of buffers 209 may be equal to a maximum quantity of concurrent UDS sessions supported by the UDS service module 208. For example, the buffers 209 may include, for each UDS session, a pre-allocated buffer space (e.g., a buffer 209) ready for transmitting a UDS response.

A second example implementation is described herein in association with UDS requests received from an incoming (receiving) interface such as, for example, receiver interface of CAN TP module 250 or receiver interface (not illustrated) of DoIP module 294. Buffer space for UDS requests may be managed and requested by each incoming (receiving) interface. In an example, the CAN TP module 250 may request, from the buffer library 214, buffer 251-a for providing a UDS request to the UDS service module 208. Once the CAN TP module 250 has assembled the complete UDS request into the buffer 251-a, the CAN TP module 250 may provide the UDS request to the UDS service module 208 via the PDU router 204.

For example, the CAN TP module 250 may store the UDS request to the buffer space corresponding to the buffer 251-a, and the CAN TP module 250 may transfer ownership of the buffer 251-a to the PDU router 204. The PDU router 204 may then transfer ownership of the buffer 251-a to the UDS service module 208 for reading and processing. In some aspects, via the PDU router 204, the CAN TP module 250 may provide the UDS service module 208 with pointer information to the buffer 251-a and an indication of valid data (e.g., the UDS request) within the buffer 251-a.

Once the UDS service module 208 has successfully received the UDS request, the UDS service module 208 may reuse the buffer 251-a when providing an outgoing UDS response. That is, for example, after successfully receiving the UDS request via the buffer 251-a, the UDS service module 208 may refrain from releasing the buffer 251-a to the buffer library 214, and the UDS service module 208 may send the UDS response via the buffer 251-a. For example, the UDS service module 208 may store the UDS response to the buffer space corresponding to the buffer 251-a, and the UDS service module 208 may transfer ownership of the buffer 251-a to the PDU router 204. The PDU router 204 may then return ownership of the buffer 251-a to the CAN TP module 250 for reading and processing.

Reuse of buffer 251-a as described herein may provide optimization of buffer usage, with a tradeoff of consuming buffer resources owned by the originating interface module (e.g., CAN TP module 250). In some aspects, if the buffer 251-a is currently not needed by the CAN TP module 250 for receiving a data transmission (e.g., an incoming PDU), the UDS service module 208 may reuse the buffer 251-a when providing an outgoing UDS response. In an alternative example, if the buffer 251-a is currently needed by the CAN TP module 250 for receiving a data transmission (e.g., an incoming PDU), the UDS service module 208 may release the buffer 251-a to the buffer library 214 and request a buffer 209 (e.g., buffer 209-a) when providing an outgoing UDS response.

In an example, the safety manager may specify whether the buffer 251-a may be reused for the UDS response. In some aspects, the UDS service module 208 may identify, from signaling received from the safety manager, whether the buffer 251-a can be reused for the UDS response. In some aspects, reuse of a buffer (e.g., buffer 251-a) may be enabled or disabled by the safety manager. Aspects of the second example implementation as described herein support optimization of buffer usage by the request and response layers of upper-level components (e.g., UDS service module 208) of the system 200.

Example criteria based on which the safety manager may specify whether a buffer associated with a module may be reused include the frequency in which the module functionality of the module is used. For example, a seldom used module (e.g., usage below a threshold value) with its own buffers may be inefficient with respect to buffer usage, and the safety manager may specify that the buffers associated with the seldom used module may be reused. Other example criteria include cases in which a module only responds to requests, but never initiates any requests. In some other aspects, the safety manager may support adaptive modes in association with specifying whether a buffer associated with a module may be reused.

A third example implementation is described herein which supports managing a buffer pool of buffers 213 pre-allocated for PDU transmissions by the PDU manager 212. In some aspects, the buffers 213 (or a subset thereof) are owned by the PDU manager 212 for PDUs that the PDU manager is to transmit. In some aspects, the buffers 213 may be referred to as transmit buffers.

In an example, when the PDU manager 212 needs buffer space (e.g., a buffer 213) to collect data signals to be transmitted (e.g., to collect a PDU's signals for transmission), the PDU manager 212 may acquire a buffer 213 having a size corresponding to the PDU. The PDU manager 212 may acquire the buffer 213 from the buffer library 214, for example, via the buffer management API.

In some aspects, the quantity of PDUs to be transmitted by the PDU manager 212 may exceed the quantity of buffers 213 pre-allocated for PDU transmissions, and the PDU manager 212 may support multiple possible assignments of PDUs to each of the buffers 213 (e.g., each pre-allocated space). In some example aspects, the quantity of buffers 213 may be configured by the system 200 to support the worst-case combination of PDUs (e.g., maximum quantity of PDUs) transmittable by the PDU manager 212 at any temporal instance, thus maximizing memory usage and minimizing required resources according to the defined behavior of the ECU.

A fourth example implementation is described herein in association with buffer pools for each lower-layer interface (e.g., modules at a lower layer compared to application framework 222). Each lower-layer interface may have a respective buffer pool for incoming PDUs. In some aspects, each lower-layer interface may exclusively configure and manage its respective buffer pool.

For example, CAN TP module 250 may exclusively configure and manage a buffer pool including buffers 251 (e.g., buffer 251-a through buffer 251-z), LIN TP module 274 may exclusively configure and manage a buffer pool including buffers 275 (e.g., buffer 275-a through buffer 275-z), DoIP module 294 may exclusively configure and manage a buffer pool including buffers 295 (e.g., buffer 295-a through buffer 295-z), IP module 297 may exclusively configure and manage a buffer pool including buffers 299 (e.g., buffer 299-a through buffer 299-z), and CAN relay module 262 may exclusively configure and manage a buffer pool including buffers 263 (e.g., buffer 263-a through buffer 263-z). In some aspects, the configuration and management of any of the buffer pools may be implemented by the safety manager module.

The buffer pools, buffers, and allocations thereof as described herein are examples, and aspects of the present disclosure are not limited thereto. The exclusivity described herein, for example, between buffers of the same buffer pool (e.g., between different subsets within the buffer pool) prevents interference between interfaces for buffer resources. Further, the exclusivity between buffers of different buffer pools (e.g., buffers 251 versus buffers 275, etc.) prevents interference between interfaces for buffer resources.

In an example, at the CAN TP layer, the system 200 (e.g., at the CAN TP module 250) may configure a pool of as many pre-allocated buffers 251 (of appropriate size) as needed to accommodate a maximum quantity of simultaneous CAN TP transmissions (PDUs) receivable at the CAN TP module 250. For example, when a CAN TP First Frame ("FF") is received at the CAN TP module 250 (e.g., at receiver interface of the CAN TP module 250), the CAN TP module 250 may request a buffer 251-a (i.e., a receive buffer) from the buffers 251 that are pre-allocated to the CAN TP module 250.

When the CAN TP module 250 receives the final consecutive frame ("CF"), the CAN TP module 250 transfers ownership of the buffer 251-a to the PDU router 204, and the PDU router 204 may transfer the ownership of the buffer 251-a to another module (e.g., an upper-level module or another lower-level interface). The other module may release ownership of the buffer 251-a (e.g., release the buffer 251-a back to the buffer library 214) once the module has completed work on the buffer 251-a. That is, for example, the other module may release ownership of the buffer 251-a once the module has successfully accessed, received and/or processed the data (e.g., CAN TP frames) stored at the buffer 251-a. The buffer 251-a will remain unusable to the CAN TP module 250 until the buffer 251-a has been released. In cases of buffer duplication (later described below) of the buffer 251-a, the buffer 251-a may remain unusable to CAN TP module 250 until all duplicates and the original (e.g., buffer 251-a) are released.

In some aspects, a module (e.g., PDU router 204) transferring ownership of a buffer (e.g., buffer 251-a) may duplicate (or clone) the buffer. Accordingly, for example, the module may use multiple buffers sharing the same memory area to send the same data to multiple destinations, and the modules receiving the duplicate buffers may each see the same section of a complete memory area. Aspects of the duplication (or cloning) described herein may be implemented based on data type (e.g., for read-only data). In some cases, such duplication (or cloning) may optimize memory usage.

Each of the multiple buffers may manage an internal reference count that allows for the release of the memory area. For example, the internal reference count may indicate how many PDUs are still using the same buffer. In an example implementation, a module (e.g., sender) may want to send the same data to multiple destinations. The module creates several PDUs, one for each receiving module (i.e., destination), such that the created PDUs refer to the same buffer, and therefore, the same data.

As a receiving module consumes the data in the PDU received at the receiving module, the receiving module releases the PDU (and the buffer inside). The buffer release process may include decrementing the internal reference count as each receiving module releases the PDU that refers to the buffer. Aspects of the present disclosure include returning the buffer to its pool once the internal reference count is equal to zero. Accordingly, for example, the buffer 'stays alive' until all receiving modules have finished using and released the buffer.

In some additional and/or alternative aspects, the module (e.g., sender) that transfers buffer ownership may set, for each PDU, a subrange in the buffer such that the PDU may include data intended only for the receiving module (i.e., destination) associated with the PDU. For example, the module that transfers the buffer ownership may configure each duplicate buffer such that the modules receiving the duplicate buffers each see a different section of the complete memory area. For example, the module transferring the buffer ownership may configure each duplicate buffer to restrict the visible window.

Aspects of the buffer library 214, buffer allocation, and buffer management (e.g., ownership transfer of buffers, buffer release, etc.) described herein support the distributed use of memory (e.g., RAM) according to predicted needs of each module or interface described herein. For example, aspects of the present disclosure support a buffer arrangement in which a pre-allocated memory space (e.g., a buffer) is reserved for every PDU that may originate at a module (e.g., PDU router 204, PDU manager 212, CAN TP module 250, LIN TP module 274, etc.) of the layered communication architecture. In some aspects, multiple PDUs may be associated with the same buffer, but the buffer may be assigned to only one of the PDUs (e.g., be reserved in association with communicating only one of the PDUs) at any one time.

The communication buffers described herein are designed as a vehicle for exchanging or passing data through a communications stack. In some aspects, the system 200 may be implemented without any prediction or enforcement of read or write permissions of respective owners of the communication buffers. In some aspects, aspects of the present disclosure may support implementations of the prediction and enforcement based on an agreement by contract between users (e.g., modules or interfaces of the layered communication architecture) of the communication buffers. The safety manager module described herein may track or monitor ownership of communication buffers, and the safety manager module may manage or restrict access to communication buffers when suitable situational criteria constitute a functional safety problem. For example, if multiple components (e.g., modules, interfaces, etc.) of the layered communication architecture have ownership of the same communication buffer, the safety manager module may restrict access associated with the communication buffer such that access to the communication buffer is read-only access (e.g., no component may change data within the buffer). In an alternative example, the safety manager module may provide a component (e.g., module, interface, etc.) of the layered communication architecture write permissions to a communication buffer for cases in which the component possesses sole ownership of the communication buffer.

Aspects of the present disclosure may support various advantages over some other systems supportive of a buffer library. For example, the techniques described herein provide a buffer library via which a module may access a buffer space, reserve the buffer space, and transfer ownership of the buffer space, thereby utilizing the buffer space as a common vehicle for transmitting or receiving data (independent of what the data represents). Aspects of the techniques described herein support low overhead, as buffers of a suitable size may be reserved for purpose-specific cases (e.g., transmission or reception of PDUs of a specific data class or data size). In some cases, end data points (e.g., receiving modules of the layered communication architecture) may acquire or reserve buffers from a buffer pool of pre-allocated buffers as described herein, without having to negotiate for the buffers individually. Aspects of the buffer library and ownership transfers of communication buffers (e.g., providing pointers to data stored at the communication buffers), as described herein, prevent copying large amounts of data and shifting the data within a memory space of a microcontroller, thereby optimizing memory usage.

Aspects of the buffer library 214 may be implemented, for example, by aspects of a database (e.g., database 618 later described with reference to Fig. 6) and/or a memory (e.g., storage device(s) 720 later described with reference to Fig. 7). Aspects of the buffer management and safety management techniques may be implemented by aspects of a communications system 400 (e.g., a computing device 468 later described with reference to Fig. 4), vehicle computing device 604 (later described with reference to Fig. 6), and/or a computer system 700 (e.g., a CPU(s) 708 later described with reference to Fig. 7).

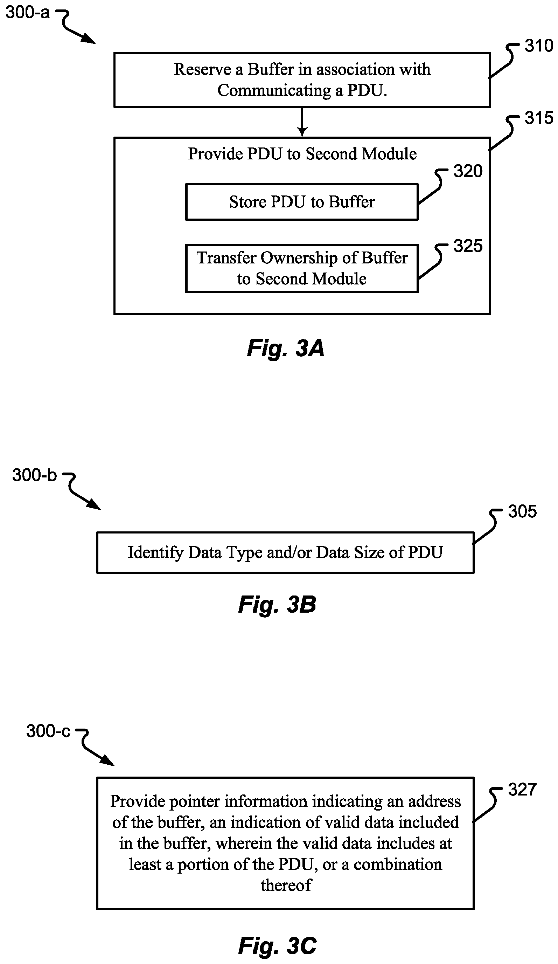

Figs. 3A through 3G illustrate example process flows 300-a through 300-g that support a distributed function-specific buffer arrangement in a communication layer in accordance with aspects of the present disclosure. In some examples, process flows 300-a through 300-g may implement aspects of the vehicle 100, the network communications system 101, and the system 200 described with reference to Figs. 1 and 2.

In the following description of the process flows 300-a through 300-g, the operations may be performed in a different order than the order shown, or the operations may be performed in different orders or at different times. Certain operations may also be left out of the process flows 300-a through 300-g, or other operations may be added to the process flows 300-a through 300-g.

It is to be understood that while various modules (e.g., PDU router 204, a PDU manager 212, CAN TP module 250, DoIP module 294, etc.) of a layered communication architecture of the system 200 may be described as performing a number of the operations of process flows 300-a through 300-g, any device (e.g., a vehicle 100, a vehicle computing device 604, a computer system 700) or module (e.g., any PDU router, PDU service module, transport module, interface module, etc.) may perform the operations shown. The process flows 300-a through 300-g are described with reference to Fig. 2, but are not limited thereto.

Referring to Fig. 3A, the process flow 300-a may begin at block 310 with reserving a buffer in association with communicating a PDU, wherein the buffer is included in a set of buffers allocated in association with a first module included in a layered communication architecture.

The process flow 300-a may continue at block 315 with providing the PDU to a second module included in the layered communication architecture. In some aspects, providing the PDU to the second module includes storing (at 320) the PDU to the buffer. In some aspects, providing the PDU to the second module includes transferring (at 325) ownership of the buffer to the second module.

In various implementations, the process flow 300-a may be performed before, at the second module, accessing the PDU from a memory space associated with the buffer as described with reference to 330 of the process flow 300-f.

Referring to Fig. 3B, the process flow 300-b may begin at block 305 with identifying a data type associated with the PDU, a data size of the PDU, or a combination thereof, wherein the set of buffers are associated with communicating a set of PDUs of the data type, the data size, or a combination thereof.

In various implementations, the process flow 300-b may be performed before reserving a buffer in association with communicating a PDU as described with reference to 310 of the process flow 300-a of Fig. 3A.

Referring to Fig. 3C, the process flow 300-c may begin at block 327 with include providing, to the second module, pointer information indicating an address of the buffer. In some examples, block 327 may include providing, to the second module, an indication of valid data included in the buffer, wherein the valid data includes at least a portion of the PDU. In some examples, block 327 may include providing, to the second module, a combination thereof (e.g., a combination of the pointer information and the indication of valid data).

In various implementations, the process flow 300-c may be included in transferring ownership of the buffer to the second module as described with reference to 325 of the process flow 300-a of Fig. 3A.

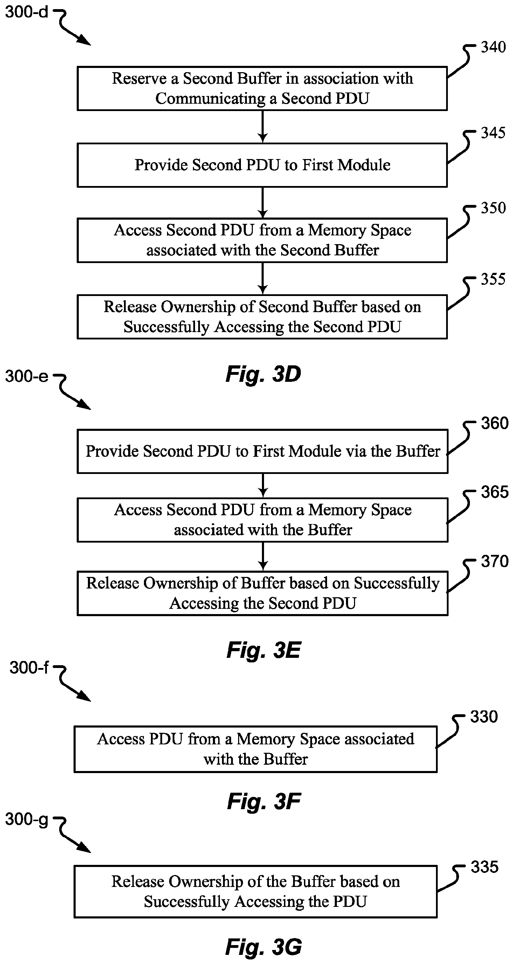

Referring to Fig. 3D, the process flow 300-d may begin at block 340 with, at the second module, reserving a second buffer in association with communicating a second PDU, wherein the second buffer is included in a second set of buffers allocated in association with the second module.

The process flow 300-d may continue at block 345, at the second module, providing the second PDU to the first module, wherein providing the second PDU to the first module includes: storing the second PDU to the second buffer and transferring ownership of the second buffer to the first module.

The process flow 300-d may continue at block 350 with, at the first module, accessing the second PDU from a memory space associated with the second buffer.

The process flow 300-d may continue at block 355 with, at the first module, releasing the ownership of the second buffer based on successfully accessing the second PDU.

In various implementations, the process flow 300-d may be performed before reserving a buffer in association with communicating a PDU as described with reference to 310 of the process flow 300-a of Fig. 3A. In various implementations, the process flow 300-d may be performed before identifying a data type associated with the PDU, a data size of the PDU, or a combination thereof as described with reference to 305 of the process flow 300-b of Fig. 3B. In various implementations, the process flow 300-d may be performed after, at the second module, releasing the ownership of the buffer based on successfully accessing the PDU as described with reference to 335 of the process flow 300-g of Fig. 3G.

Referring to Fig. 3E, the process flow 300-e may begin at block 360 with, at the second module, providing a second PDU to the first module via the buffer. In some aspects, providing the second PDU to the first module includes storing the second PDU to the buffer and returning the ownership of the buffer to the first module.

The process flow 300-e may continue at block 365 with, at the first module, accessing the second PDU from a memory space associated with the buffer.

The process flow 300-e may continue at block 370 with, at the first module, releasing the ownership of the buffer based on successfully accessing the second PDU.

In various implementations, the process flow 300-e may be performed after, at the second module, accessing the PDU from a memory space associated with the buffer as described with reference to 330 of the process flow 300-f of Fig. 3F.

Referring to Fig. 3F, the process flow 300-f may begin at block 330 with, at the second module, accessing the PDU from a memory space associated with the buffer.

In various implementations, the process flow 300-f may be performed after transferring ownership of the buffer to the second module as described with reference to 325 of the process flow 300-a of Fig. 3A. In various implementations, the process flow 300-f may be performed before, at the second module, providing a second PDU to the first module via the buffer as described with reference to 360 of the process flow 300-e of Fig. 3E. In various implementations, the process flow 300-f may be performed before, at the second module, releasing the ownership of the buffer based on successfully accessing the PDU as described with reference to 335 of the process flow 300-g of Fig. 3G.

Referring to Fig. 3G, the process flow 300-g may begin at block 335 with, at the second module, releasing the ownership of the buffer based on successfully accessing the PDU.

In various implementations, the process flow 300-g may be performed after, at the second module, accessing the PDU from the memory space associated with the buffer as described with reference to 330 of the process flow 300-f of Fig. 3F. In various implementations, the process flow 300-g may be performed before, at the second module, reserving a second buffer in association with communicating a second PDU as described with reference to 340 of the process flow 300-d of Fig. 3D.

Fig. 4 is a block diagram illustrating an example of a communication environment of the vehicle 100 in accordance with aspects of the present disclosure.

The communication system 400 may include one or more vehicle driving vehicle sensors and systems 404, sensor processors 430, sensor data memory 434, vehicle control system 438, communications subsystem 450, control data memory 464, computing devices 468, display devices 472, and other components 474 that may be associated with a vehicle 100. These associated components may be electrically and/or communicatively coupled to one another via at least one bus 460. In some embodiments, the one or more associated components may send and/or receive signals across a communication network 452 to at least one of a navigation source 456A, a control source 456B, or some other entity 456N.

In accordance with at least some embodiments of the present disclosure, the communication network 452 may comprise any type of known communication medium or collection of communication media and may use any type of protocols, such as SIP, TCP/IP, SNA, IPX, AppleTalk, and the like, to transport messages between endpoints. The communication network 452 may include wired and/or wireless communication technologies. The Internet is an example of the communication network 452 that constitutes an Internet Protocol (IP) network consisting of many computers, computing networks, and other communication devices located all over the world, which are connected through many telephone systems and other means. Other examples of the communication network 452 include, without limitation, a standard Plain Old Telephone System (POTS), an Integrated Services Digital Network (ISDN), the Public Switched Telephone Network (PSTN), a Local Area Network (LAN), such as an Ethernet network, a Token-Ring network and/or the like, a Wide Area Network (WAN), a virtual network, including without limitation a virtual private network ("VPN"); the Internet, an intranet, an extranet, a cellular network, an infra-red network; a wireless network (e.g., a network operating under any of the IEEE 802.9 suite of protocols, the Bluetooth^{®} protocol known in the art, and/or any other wireless protocol), and any other type of packet-switched or circuit-switched network known in the art and/or any combination of these and/or other networks. In addition, it can be appreciated that the communication network 452 need not be limited to any one network type, and instead may be comprised of a number of different networks and/or network types. The communication network 452 may comprise a number of different communication media such as coaxial cable, copper cable/wire, fiber-optic cable, antennas for transmitting/receiving wireless messages, and combinations thereof.

The driving vehicle sensors and systems 404 may include at least one navigation sensor 408 (e.g., global positioning system (GPS), etc.), orientation sensor 412, odometry 416, LIDAR sensor 420, RADAR sensor 424, ultrasonic sensor 428, camera sensor 432, infrared (IR) sensor 436, and/or other sensor or system 438. These driving vehicle sensors and systems 404 may be similar, if not identical, to the sensors and systems 116A-K, 112 described in conjunction with Figs. 1 and 2.

The navigation sensor 408 may include one or more sensors having receivers and antennas that are configured to utilize a satellite-based navigation system including a network of navigation satellites capable of providing geolocation and time information to at least one component of the vehicle 100. Examples of the navigation sensor 408 as described herein may include, but are not limited to, at least one of Garmin^{®} GLO^{™} family of GPS and GLONASS combination sensors, Garmin^{®} GPS 15x^{™} family of sensors, Garmin^{®} GPS 16x^{™} family of sensors with high-sensitivity receiver and antenna, Garmin^{®} GPS 18x OEM family of high-sensitivity GPS sensors, Dewetron DEWE-VGPS series of GPS sensors, GlobalSat 1-Hz series of GPS sensors, other industry-equivalent navigation sensors and/or systems, and may perform navigational and/or geolocation functions using any known or future-developed standard and/or architecture.

The orientation sensor 412 may include one or more sensors configured to determine an orientation of the vehicle 100 relative to at least one reference point. In some embodiments, the orientation sensor 412 may include at least one pressure transducer, stress/strain gauge, accelerometer, gyroscope, and/or geomagnetic sensor. Examples of the navigation sensor 408 as described herein may include, but are not limited to, at least one of Bosch Sensortec BMX 160 series low-power absolute orientation sensors, Bosch Sensortec BMX055 9-axis sensors, Bosch Sensortec BMI055 6-axis inertial sensors, Bosch Sensortec BMI160 6-axis inertial sensors, Bosch Sensortec BMF055 9-axis inertial sensors (accelerometer, gyroscope, and magnetometer) with integrated Cortex M0+ microcontroller, Bosch Sensortec BMP280 absolute barometric pressure sensors, Infineon TLV494D-A1B6 4D magnetic sensors, Infineon TLI494D-W1B6 4D magnetic sensors, Infineon TL family of 4D magnetic sensors, Murata Electronics SCC2000 series combined gyro sensor and accelerometer, Murata Electronics SCC1400 series combined gyro sensor and accelerometer, other industry-equivalent orientation sensors and/or systems, which may perform orientation detection and/or determination functions using any known or future-developed standard and/or architecture.

The odometry sensor and/or system 416 may include one or more components that is configured to determine a change in position of the vehicle 100 over time. In some embodiments, the odometry system 416 may utilize data from one or more other sensors and/or systems 404 in determining a position (e.g., distance, location, etc.) of the vehicle 100 relative to a previously measured position for the vehicle 100. Additionally or alternatively, the odometry sensors 416 may include one or more encoders, Hall speed sensors, and/or other measurement sensors/devices configured to measure a wheel speed, rotation, and/or number of revolutions made over time. Examples of the odometry sensor/system 416 as described herein may include, but are not limited to, at least one of Infineon TLE4924/26/27/28C high-performance speed sensors, Infineon TL4941plusC(B) single chip differential Hall wheel-speed sensors, Infineon TL5041plusC Giant Mangnetoresistance (GMR) effect sensors, Infineon TL family of magnetic sensors, EPC Model 25SP Accu-CoderPro^{™} incremental shaft encoders, EPC Model 40M compact incremental encoders with advanced magnetic sensing and signal processing technology, EPC Model 925 absolute shaft encoders, EPC Model 958 absolute shaft encoders, EPC Model MA46S/MA64S/SA46S absolute shaft encoders, Dynapar^{™} F18 commutating optical encoder, Dynapar^{™} HS45R family of phased array encoder sensors, other industry-equivalent odometry sensors and/or systems, and may perform change in position detection and/or determination functions using any known or future-developed standard and/or architecture.

The LIDAR sensor/system 420 may include one or more components configured to measure distances to targets using laser illumination. In some embodiments, the LIDAR sensor/system 420 may provide 4D imaging data of an environment around the vehicle 100. The imaging data may be processed to generate a full 460-degree view of the environment around the vehicle 100. The LIDAR sensor/system 420 may include a laser light generator configured to generate a plurality of target illumination laser beams (e.g., laser light channels). In some embodiments, this plurality of laser beams may be aimed at, or directed to, a rotating reflective surface (e.g., a mirror) and guided outwardly from the LIDAR sensor/system 420 into a measurement environment. The rotating reflective surface may be configured to continually rotate 460 degrees about an axis, such that the plurality of laser beams is directed in a full 460-degree range around the vehicle 100. A photodiode receiver of the LIDAR sensor/system 420 may detect when light from the plurality of laser beams emitted into the measurement environment returns (e.g., reflected echo) to the LIDAR sensor/system 420. The LIDAR sensor/system 420 may calculate, based on a time associated with the emission of light to the detected return of light, a distance from the vehicle 100 to the illuminated target. In some embodiments, the LIDAR sensor/system 420 may generate over 2.0 million points per second and have an effective operational range of at least 100 meters. Examples of the LIDAR sensor/system 420 as described herein may include, but are not limited to, at least one of Velodyne^{®} LiDAR^{™} HDL-64E 64-channel LIDAR sensors, Velodyne^{®} LiDAR^{™} HDL-42E 42-channel LIDAR sensors, Velodyne^{®} LiDAR^{™} PUCK^{™} VLP-16 16-channel LIDAR sensors, Leica Geosystems Pegasus:Two mobile sensor platform, Garmin^{®} LIDAR-Lite v4 measurement sensor, Quanergy M8 LiDAR sensors, Quanergy S4 solid state LiDAR sensor, LeddarTech^{®} LeddarVU compact solid state fixed-beam LIDAR sensors, other industry-equivalent LIDAR sensors and/or systems, and may perform illuminated target and/or obstacle detection in an environment around the vehicle 100 using any known or future-developed standard and/or architecture.

The RADAR sensors 424 may include one or more radio components that are configured to detect objects/targets in an environment of the vehicle 100. In some embodiments, the RADAR sensors 424 may determine a distance, position, and/or movement vector (e.g., angle, speed, etc.) associated with a target over time. The RADAR sensors 424 may include a transmitter configured to generate and emit electromagnetic waves (e.g., radio, microwaves, etc.) and a receiver configured to detect returned electromagnetic waves. In some embodiments, the RADAR sensors 424 may include at least one processor configured to interpret the returned electromagnetic waves and determine locational properties of targets. Examples of the RADAR sensors 424 as described herein may include, but are not limited to, at least one of Infineon RASIC^{™} RTN7745PL transmitter and RRN7745PL/46PL receiver sensors, Autoliv ASP Vehicle RADAR sensors, Delphi L2C0051TR 77GHz ESR Electronically Scanning Radar sensors, Fujitsu Ten Ltd. Automotive Compact 77GHz 4D Electronic Scan Millimeter Wave Radar sensors, other industry-equivalent RADAR sensors and/or systems, and may perform radio target and/or obstacle detection in an environment around the vehicle 100 using any known or future-developed standard and/or architecture.

The ultrasonic sensors 428 may include one or more components that are configured to detect objects/targets in an environment of the vehicle 100. In some embodiments, the ultrasonic sensors 428 may determine a distance, position, and/or movement vector (e.g., angle, speed, etc.) associated with a target over time. The ultrasonic sensors 428 may include an ultrasonic transmitter and receiver, or transceiver, configured to generate and emit ultrasound waves and interpret returned echoes of those waves. In some embodiments, the ultrasonic sensors 428 may include at least one processor configured to interpret the returned ultrasonic waves and determine locational properties of targets. Examples of the ultrasonic sensors 428 as described herein may include, but are not limited to, at least one of Texas Instruments TIDA-00151 automotive ultrasonic sensor interface IC sensors, MaxBotix^{®} MB8450 ultrasonic proximity sensor, MaxBotix^{®} ParkSonar^{™}-EZ ultrasonic proximity sensors, Murata Electronics MA40H1S-R open-structure ultrasonic sensors, Murata Electronics MA40S4R/S open-structure ultrasonic sensors, Murata Electronics MA58MF14-7N waterproof ultrasonic sensors, other industry-equivalent ultrasonic sensors and/or systems, and may perform ultrasonic target and/or obstacle detection in an environment around the vehicle 100 using any known or future-developed standard and/or architecture.

The camera sensors 432 may include one or more components configured to detect image information associated with an environment of the vehicle 100. In some embodiments, the camera sensors 432 may include a lens, filter, image sensor, and/or a digital image processer. It is an aspect of the present disclosure that multiple camera sensors 432 may be used together to generate stereo images providing depth measurements. Examples of the camera sensors 432 as described herein may include, but are not limited to, at least one of ON Semiconductor^{®} MT9V024 Global Shutter VGA GS CMOS image sensors, Teledyne DALSA Falcon2 camera sensors, CMOSIS CMV50000 high-speed CMOS image sensors, other industry-equivalent camera sensors and/or systems, and may perform visual target and/or obstacle detection in an environment around the vehicle 100 using any known or future-developed standard and/or architecture.

The infrared (IR) sensors 436 may include one or more components configured to detect image information associated with an environment of the vehicle 100. The IR sensors 436 may be configured to detect targets in low-light, dark, or poorly-lit environments. The IR sensors 436 may include an IR light emitting element (e.g., IR light emitting diode (LED), etc.) and an IR photodiode. In some embodiments, the IR photodiode may be configured to detect returned IR light at or about the same wavelength to that emitted by the IR light emitting element. In some embodiments, the IR sensors 436 may include at least one processor configured to interpret the returned IR light and determine locational properties of targets. The IR sensors 436 may be configured to detect and/or measure a temperature associated with a target (e.g., an object, pedestrian, other vehicle, etc.). Examples of IR sensors 436 as described herein may include, but are not limited to, at least one of Opto Diode lead-salt IR array sensors, Opto Diode OD-850 Near-IR LED sensors, Opto Diode SA/SHA727 steady state IR emitters and IR detectors, FLIR^{®} LS microbolometer sensors, FLIR^{®} TacFLIR 480-HD InSb MWIR FPA and HD MWIR thermal sensors, FLIR^{®} VOx 640x480 pixel detector sensors, Delphi IR sensors, other industry-equivalent IR sensors and/or systems, and may perform IR visual target and/or obstacle detection in an environment around the vehicle 100 using any known or future-developed standard and/or architecture.

The vehicle 100 can also include one or more interior sensors 437. Interior sensors 437 can measure characteristics of the inside environment of the vehicle 100.

A navigation system 402 can include any hardware and/or software used to navigate the vehicle either manually or autonomously. The navigation system 402 may be as described in conjunction with Fig. 4C.

In some embodiments, the driving vehicle sensors and systems 404 may include other sensors 406-437 and/or combinations of the sensors 406-437 described above. Additionally or alternatively, one or more of the sensors 406-437 described above may include one or more processors configured to process and/or interpret signals detected by the one or more sensors 406-437. In some embodiments, the processing of at least some sensor information provided by the vehicle sensors and systems 404 may be processed by at least one sensor processor 430. Raw and/or processed sensor data may be stored in a sensor data memory 434 storage medium. In some embodiments, the sensor data memory 434 may store instructions used by the sensor processor 430 for processing sensor information provided by the sensors and systems 404. In any event, the sensor data memory 434 may be a disk drive, optical storage device, solid-state storage device such as a random access memory ("RAM") and/or a read-only memory ("ROM"), which can be programmable, flash-updateable, and/or the like.

The vehicle control system 438 may receive processed sensor information from the sensor processor 430 and determine to control an aspect of the vehicle 100. Controlling an aspect of the vehicle 100 may include presenting information via one or more display devices 472 associated with the vehicle, sending commands to one or more computing devices 468 associated with the vehicle, and/or controlling a driving operation of the vehicle. In some embodiments, the vehicle control system 438 may correspond to one or more computing systems that control driving operations of the vehicle 100 in accordance with the Levels of driving autonomy described above. In one embodiment, the vehicle control system 438 may operate a speed of the vehicle 100 by controlling an output signal to the accelerator and/or braking system of the vehicle. In this example, the vehicle control system 438 may receive sensor data describing an environment surrounding the vehicle 100 and, based on the sensor data received, determine to adjust the acceleration, power output, and/or braking of the vehicle 100. The vehicle control system 438 may additionally control steering and/or other driving functions of the vehicle 100.

The vehicle control system 438 may communicate, in real-time, with the driving sensors and systems 404 forming a feedback loop. In particular, upon receiving sensor information describing a condition of targets in the environment surrounding the vehicle 100, the vehicle control system 438 may autonomously make changes to a driving operation of the vehicle 100. The vehicle control system 438 may then receive subsequent sensor information describing any change to the condition of the targets detected in the environment as a result of the changes made to the driving operation. This continual cycle of observation (e.g., via the sensors, etc.) and action (e.g., selected control or non-control of vehicle operations, etc.) allows the vehicle 100 to operate autonomously in the environment.

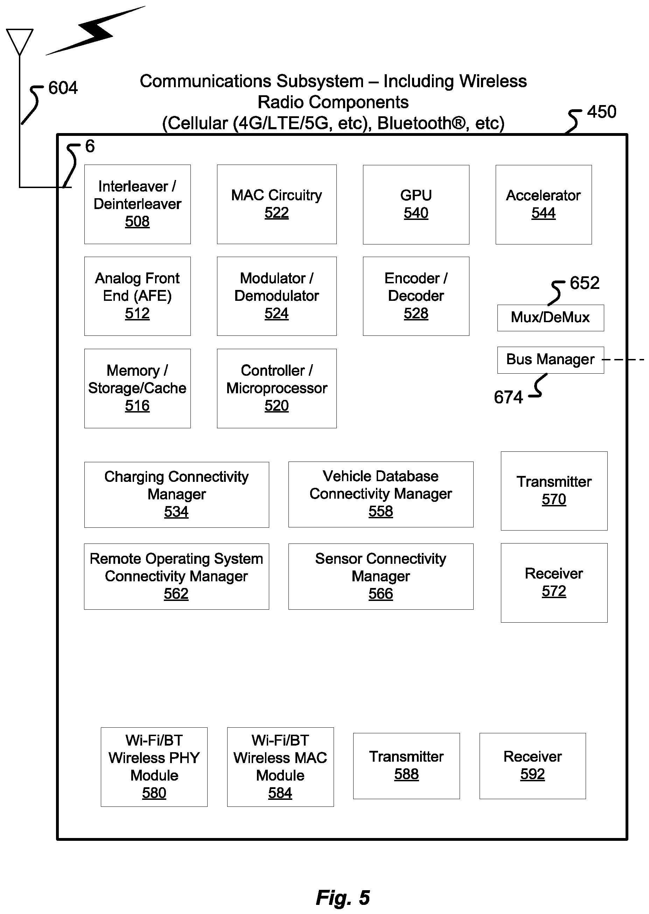

In some embodiments, the one or more components of the vehicle 100 (e.g., the sensors and systems 404, vehicle control system 438, display devices 472, etc.) may communicate across the communication network 452 to one or more entities 456A-N via a communications subsystem 450 of the vehicle 100. Embodiments of the communications subsystem 450 are described in greater detail in conjunction with Fig. 5. For instance, the navigation sensors 408 may receive global positioning, location, and/or navigational information from a navigation source 456A. In some embodiments, the navigation source 456A may be a global navigation satellite system (GNSS) similar, if not identical, to NAVSTAR GPS, GLONASS, EU Galileo, and/or the BeiDou Navigation Satellite System (BDS) to name a few.

In some embodiments, the vehicle control system 438 may receive control information from one or more control sources 456B. The control source 456 may provide vehicle control information including autonomous driving control commands, vehicle operation override control commands, and the like. The control source 456 may correspond to an autonomous vehicle control system, a traffic control system, an administrative control entity, and/or some other controlling server. It is an aspect of the present disclosure that the vehicle control system 438 and/or other components of the vehicle 100 may exchange communications with the control source 456 across the communication network 452 and via the communications subsystem 450.

Information associated with controlling driving operations of the vehicle 100 may be stored in a control data memory 464 storage medium. The control data memory 464 may store instructions used by the vehicle control system 438 for controlling driving operations of the vehicle 100, historical control information, autonomous driving control rules, and the like. In some embodiments, the control data memory 464 may be a disk drive, optical storage device, solid-state storage device such as a random access memory ("RAM") and/or a read-only memory ("ROM"), which can be programmable, flash-updateable, and/or the like.

In addition to the mechanical components described herein, the vehicle 100 may include a number of user interface devices. The user interface devices receive and translate human input into a mechanical movement or electrical signal or stimulus. The human input may be one or more of motion (e.g., body movement, body part movement, in two-dimensional or three-dimensional space, etc.), voice, touch, and/or physical interaction with the components of the vehicle 100. In some embodiments, the human input may be configured to control one or more functions of the vehicle 100 and/or systems of the vehicle 100 described herein. User interfaces may include, but are in no way limited to, at least one graphical user interface of a display device, steering wheel or mechanism, transmission lever or button (e.g., including park, neutral, reverse, and/or drive positions, etc.), throttle control pedal or mechanism, brake control pedal or mechanism, power control switch, communications equipment, etc.

Fig. 5 illustrates a hardware diagram of communications componentry that can be optionally associated with the vehicle 100 in accordance with embodiments of the present disclosure.

The communications componentry can include one or more wired or wireless devices such as a transceiver(s) and/or modem that allows communications not only between the various systems disclosed herein but also with other devices, such as devices on a network, and/or on a distributed network such as the Internet and/or in the cloud and/or with other vehicle(s).

The communications subsystem 450 can also include inter- and intra-vehicle communications capabilities such as hotspot and/or access point connectivity for any one or more of the vehicle occupants and/or vehicle-to-vehicle communications.

Additionally, and while not specifically illustrated, the communications subsystem 450 can include one or more communications links (that can be wired or wireless) and/or communications busses (managed by the bus manager 574), including one or more of CAN bus, OBD-II, ARCINC 429, Byteflight, CAN (Controller Area Network), D2B (Domestic Digital Bus), FlexRay, DC-BUS, IDB-1394, IEBus, I2C, ISO 9141-1/-2, J1708, J1587, J1850, J1939, ISO 11783, Keyword Protocol 2000, LIN (Local Interconnect Network), MOST (Media Oriented Systems Transport), Multifunction Vehicle Bus, SMARTwireX, SPI, VAN (Vehicle Area Network), and the like or in general any communications protocol and/or standard(s).

The various protocols and communications can be communicated one or more of wirelessly and/or over transmission media such as single wire, twisted pair, fiber optic, IEEE 1394, MIL-STD-1553, MIL-STD-1773, power-line communication, or the like. (All of the above standards and protocols are incorporated herein by reference in their entirety).

As discussed, the communications subsystem 450 enables communications between any of the inter-vehicle systems and subsystems as well as communications with non-collocated resources, such as those reachable over a network such as the Internet.

The communications subsystem 450, in addition to well-known componentry (which has been omitted for clarity), includes interconnected elements including one or more of: one or more antennas 504, an interleaver/deinterleaver 508, an analog front end (AFE) 512, memory/storage/cache 516, controller/microprocessor 520, MAC circuitry 522, modulator/demodulator 524, encoder/decoder 528, a plurality of connectivity managers 534, 558, 562, 566, GPU 540, accelerator 544, a multiplexer/demultiplexer 552, transmitter 570, receiver 572 and additional wireless radio components such as a Wi-Fi PHY/Bluetooth^{®} module 580, a Wi-Fi/BT MAC module 584, additional transmitter(s) 588 and additional receiver(s) 592. The various elements in the communications subsystem 450 are connected by one or more links/busses 5 (not shown, again for sake of clarity).

The communications subsystem 450 can have one more antennas 504, for use in wireless communications such as multi-input multi-output (MIMO) communications, multi-user multi-input multi-output (MU-MIMO) communications Bluetooth^{®}, LTE, 4G, 5G, Near-Field Communication (NFC), etc., and in general for any type of wireless communications. The antenna(s) 504 can include, but are not limited to one or more of directional antennas, omnidirectional antennas, monopoles, patch antennas, loop antennas, microstrip antennas, dipoles, and any other antenna(s) suitable for communication transmission/reception. In an exemplary embodiment, transmission/reception using MIMO may require particular antenna spacing. In another exemplary embodiment, MIMO transmission/reception can enable spatial diversity allowing for different channel characteristics at each of the antennas. In yet another embodiment, MIMO transmission/reception can be used to distribute resources to multiple users for example within the vehicle 100 and/or in another vehicle.

Antenna(s) 504 generally interact with the Analog Front End (AFE) 512, which is needed to enable the correct processing of the received modulated signal and signal conditioning for a transmitted signal. The AFE 512 can be functionally located between the antenna and a digital baseband system in order to convert the analog signal into a digital signal for processing and vice-versa.

The subsystem 450 can also include a controller/microprocessor 520 and a memory/storage/cache 516. The subsystem 450 can interact with the memory/storage/cache 516 which may store information and operations necessary for configuring and transmitting or receiving the information described herein. The memory/storage/cache 516 may also be used in connection with the execution of application programming or instructions by the controller/microprocessor 520, and for temporary or long term storage of program instructions and/or data. As examples, the memory/storage/cache 520 may comprise a computer-readable device, RAM, ROM, DRAM, SDRAM, and/or other storage device(s) and media.

The controller/microprocessor 520 may comprise a general purpose programmable processor or controller for executing application programming or instructions related to the subsystem 450. Furthermore, the controller/microprocessor 520 can perform operations for configuring and transmitting/receiving information as described herein. The controller/microprocessor 520 may include multiple processor cores, and/or implement multiple virtual processors. Optionally, the controller/microprocessor 520 may include multiple physical processors. By way of example, the controller/microprocessor 520 may comprise a specially configured Application Specific Integrated Circuit (ASIC) or other integrated circuit, a digital signal processor(s), a controller, a hardwired electronic or logic circuit, a programmable logic device or gate array, a special purpose computer, or the like.

The subsystem 450 can further include a transmitter(s) 570, 588 and receiver(s) 572, 592 which can transmit and receive signals, respectively, to and from other devices, subsystems and/or other destinations using the one or more antennas 504 and/or links/busses. Included in the subsystem 450 circuitry is the medium access control or MAC Circuitry 522. MAC circuitry 522 provides for controlling access to the wireless medium. In an exemplary embodiment, the MAC circuitry 522 may be arranged to contend for the wireless medium and configure frames or packets for communicating over the wired/wireless medium.

The subsystem 450 can also optionally contain a security module (not shown). This security module can contain information regarding but not limited to, security parameters required to connect the device to one or more other devices or other available network(s), and can include WEP or WPA/WPA-2 (optionally + AES and/or TKIP) security access keys, network keys, etc. The WEP security access key is a security password used by Wi-Fi networks. Knowledge of this code can enable a wireless device to exchange information with an access point and/or another device. The information exchange can occur through encoded messages with the WEP access code often being chosen by the network administrator. WPA is an added security standard that is also used in conjunction with network connectivity with stronger encryption than WEP.

In some embodiments, the communications subsystem 450 also includes a GPU 540, an accelerator 544, a Wi-Fi/BT/BLE (Bluetooth^{®} Low-Energy) PHY module 580 and a Wi-FiIBTIBLE MAC module 584 and optional wireless transmitter 588 and optional wireless receiver 592. In some embodiments, the GPU 540 may be a graphics processing unit, or visual processing unit, comprising at least one circuit and/or chip that manipulates and changes memory to accelerate the creation of images in a frame buffer for output to at least one display device. The GPU 540 may include one or more of a display device connection port, printed circuit board (PCB), a GPU chip, a metal-oxide-semiconductor field-effect transistor (MOSFET), memory (e.g., single data rate random-access memory (SDRAM), double data rate random-access memory (DDR) RAM, etc., and/or combinations thereof), a secondary processing chip (e.g., handling video out capabilities, processing, and/or other functions in addition to the GPU chip, etc.), a capacitor, heatsink, temperature control or cooling fan, motherboard connection, shielding, and the like.

The various connectivity managers 534, 558, 562, 566 manage and/or coordinate communications between the subsystem 450 and one or more of the systems disclosed herein and one or more other devices/systems. The connectivity managers 534, 558, 562, 566 include a charging connectivity manager 534, a vehicle database connectivity manager 558, a remote operating system connectivity manager 562, and a sensor connectivity manager 566.

The charging connectivity manager 534 can coordinate not only the physical connectivity between the vehicle 100 and a charging device/vehicle, but can also communicate with one or more of a power management controller, one or more third parties and optionally a billing system(s). As an example, the vehicle 100 can establish communications with the charging device/vehicle to one or more of coordinate interconnectivity between the two (e.g., by spatially aligning the charging receptacle on the vehicle with the charger on the charging vehicle) and optionally share navigation information. Once charging is complete, the amount of charge provided can be tracked and optionally forwarded to, for example, a third party for billing. In addition to being able to manage connectivity for the exchange of power, the charging connectivity manager 534 can also communicate information, such as billing information to the charging vehicle and/or a third party. This billing information could be, for example, the owner of the vehicle, the driver/occupant(s) of the vehicle, company information, or in general any information usable to charge the appropriate entity for the power received.

The vehicle database connectivity manager 558 allows the subsystem to receive and/or share information stored in the vehicle database. This information can be shared with other vehicle components/subsystems and/or other entities, such as third parties and/or charging systems. The information can also be shared with one or more vehicle occupant devices, such as an app (application) on a mobile device the driver uses to track information about the vehicle 100 and/or a dealer or service/maintenance provider. In general, any information stored in the vehicle database can optionally be shared with any one or more other devices optionally subject to any privacy or confidentially restrictions.

The remote operating system connectivity manager 562 facilitates communications between the vehicle 100 and any one or more autonomous vehicle systems. These communications can include one or more of navigation information, vehicle information, other vehicle information, weather information, occupant information, or in general any information related to the remote operation of the vehicle 100.

The sensor connectivity manager 566 facilitates communications between any one or more of the vehicle sensors (e.g., the driving vehicle sensors and systems 304, etc.) and any one or more of the other vehicle systems. The sensor connectivity manager 566 can also facilitate communications between any one or more of the sensors and/or vehicle systems and any other destination, such as a service company, app, or in general to any destination where sensor data is needed.

In accordance with one exemplary embodiment, any of the communications discussed herein can be communicated via the conductor(s) used for charging. One exemplary protocol usable for these communications is Power-line communication (PLC). PLC is a communication protocol that uses electrical wiring to simultaneously carry both data, and Alternating Current (AC) electric power transmission or electric power distribution. It is also known as power-line carrier, power-line digital subscriber line (PDSL), mains communication, power-line telecommunications, or power-line networking (PLN). For DC environments in vehicles PLC can be used in conjunction with CAN bus, LIN-bus over power line (DC-LIN) and DC-BUS.

The communications subsystem can also optionally manage one or more identifiers, such as an IP (Internet Protocol) address(es), associated with the vehicle and one or other system or subsystems or components and/or devices therein. These identifiers can be used in conjunction with any one or more of the connectivity managers as discussed herein.

Fig. 6 illustrates a block diagram of a computing environment 600 that may function as the servers, user computers, or other systems provided and described herein. The computing environment 600 includes one or more user computers, or computing devices, such as a vehicle computing device 604, a communication device 608, and/or more 612. The computing devices 604, 608, 612 may include general purpose personal computers (including, merely by way of example, personal computers, and/or laptop computers running various versions of Microsoft Corp.'s Windows^{®} and/or Apple Corp.'s Macintosh^{®} operating systems) and/or workstation computers running any of a variety of commercially-available UNIX^{®} or UNIX-like operating systems. These computing devices 604, 608, 612 may also have any of a variety of applications, including for example, database client and/or server applications, and web browser applications. Alternatively, the computing devices 604, 608, 612 may be any other electronic device, such as a thin-client computer, Internet-enabled mobile telephone, and/or personal digital assistant, capable of communicating via a network 452 and/or displaying and navigating web pages or other types of electronic documents or information. Although the exemplary computing environment 600 is shown with two computing devices, any number of user computers or computing devices may be supported.

The computing environment 600 may also include one or more servers 614, 616. In this example, server 614 is shown as a web server and server 616 is shown as an application server. The web server 614, which may be used to process requests for web pages or other electronic documents from computing devices 604, 608, 612. The web server 614 can be running an operating system including any of those discussed above, as well as any commercially-available server operating systems. The web server 614 can also run a variety of server applications, including SIP (Session Initiation Protocol) servers, HTTP(s) servers, FTP servers, CGI servers, database servers, Java^{®} servers, and the like. In some instances, the web server 614 may publish operations available operations as one or more web services.

The computing environment 600 may also include one or more file and or/application servers 616, which can, in addition to an operating system, include one or more applications accessible by a client running on one or more of the computing devices 604, 608, 612. The server(s) 616 and/or 614 may be one or more general purpose computers capable of executing programs or scripts in response to the computing devices 604, 608, 612. As one example, the server 616, 614 may execute one or more web applications. The web application may be implemented as one or more scripts or programs written in any programming language, such as Java^{®}, C, C#, or C++, and/or any scripting language, such as Perl, Python, or TCL, as well as combinations of any programming/scripting languages. The application server(s) 616 may also include database servers, including without limitation those commercially available from Oracle^{®}, Microsoft^{®}, Sybase^{®}, IBM^{®} and the like, which can process requests from database clients running on a computing device 604, 608, 612.

The web pages created by the server 614 and/or 616 may be forwarded to a computing device 604, 608, 612 via a web (file) server 614, 616. Similarly, the web server 614 may be able to receive web page requests, web services invocations, and/or input data from a computing device 604, 608, 612 (e.g., a user computer, etc.) and can forward the web page requests and/or input data to the web (application) server 616. In further embodiments, the server 616 may function as a file server. Although for ease of description, Fig. 6 illustrates a separate web server 614 and file/application server 616, those skilled in the art will recognize that the functions described with respect to servers 614, 616 may be performed by a single server and/or a plurality of specialized servers, depending on implementation-specific needs and parameters. The computer systems 604, 608, 612, web (file) server 614 and/or web (application) server 616 may function as the system, devices, or components described in Figs. 1-6.

The computing environment 600 may also include a database 618. The database 618 may reside in a variety of locations. By way of example, database 618 may reside on a storage medium local to (and/or resident in) one or more of the computers 604, 608, 612, 614, 616. Alternatively, it may be remote from any or all of the computers 604, 608, 612, 614, 616, and in communication (e.g., via the network 452) with one or more of these. The database 618 may reside in a storage-area network ("SAN") familiar to those skilled in the art. Similarly, any necessary files for performing the functions attributed to the computers 604, 608, 612, 614, 616 may be stored locally on the respective computer and/or remotely, as appropriate. The database 618 may be a relational database, such as Oracle 20i^{®}, that is adapted to store, update, and retrieve data in response to SQL-formatted commands.

Fig. 7 illustrates one embodiment of a computer system 700 upon which the servers, user computers, computing devices, or other systems or components described above may be deployed or executed. The computer system 700 is shown comprising hardware elements that may be electrically coupled via a bus 704. The hardware elements may include one or more central processing units (CPUs) 708; one or more input devices 712 (e.g., a mouse, a keyboard, etc.); and one or more output devices 716 (e.g., a display device, a printer, etc.). The computer system 700 may also include one or more storage devices 720. By way of example, storage device(s) 720 may be disk drives, optical storage devices, solid-state storage devices such as a random access memory ("RAM") and/or a read-only memory ("ROM"), which can be programmable, flash-updateable and/or the like.

The computer system 700 may additionally include a computer-readable storage media reader 724; a communications system 728 (e.g., a modem, a network card (wireless or wired), an infra-red communication device, etc.); and working memory 736, which may include RAM and ROM devices as described above. The computer system 700 may also include a processing acceleration unit 732, which can include a DSP, a special-purpose processor, and/or the like.

The computer-readable storage media reader 724 can further be connected to a computer-readable storage medium, together (and, optionally, in combination with storage device(s) 720) comprehensively representing remote, local, fixed, and/or removable storage devices plus storage media for temporarily and/or more permanently containing computer-readable information. The communications system 728 may permit data to be exchanged with a network and/or any other computer described above with respect to the computer environments described herein. Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information.

The computer system 700 may also comprise software elements, shown as being currently located within a working memory 736, including an operating system 740 and/or other code 744. It should be appreciated that alternate embodiments of a computer system 700 may have numerous variations from that described above. For example, customized hardware might also be used and/or particular elements might be implemented in hardware, software (including portable software, such as applets), or both. Further, connection to other computing devices such as network input/output devices may be employed.

Examples of the processors 708 as described herein may include, but are not limited to, at least one of Qualcomm^{®} Snapdragon^{®} 800 and 801, Qualcomm^{®} Snapdragon^{®} 620 and 615 with 4G LTE Integration and 64-bit computing, Apple^{®} A7 processor with 64-bit architecture, Apple^{®} M7 motion coprocessors, Samsung^{®} Exynos^{®} series, the Intel^{®} Core^{™} family of processors, the Intel^{®} Xeon^{®} family of processors, the Intel^{®} Atom^{™} family of processors, the Intel Itanium^{®} family of processors, Intel^{®} Core^{®} i5-4670K and i7-4770K 22nm Haswell, Intel^{®} Core^{®} i5-3570K 22nm Ivy Bridge, the AMD^{®} FX^{™} family of processors, AMD^{®} FX-4300, FX-6300, and FX-8450 32nm Vishera, AMD^{®} Kaveri processors, Texas Instruments^{®} Jacinto C6000^{™} automotive infotainment processors, Texas Instruments^{®} OMAP^{™} automotive-grade mobile processors, ARM^{®} Cortex^{™}-M processors, ARM^{®} Cortex-A and ARM926EJ-S^{™} processors, other industry-equivalent processors, and may perform computational functions using any known or future-developed standard, instruction set, libraries, and/or architecture.

Any of the steps, functions, and operations discussed herein can be performed continuously and automatically.

The exemplary systems and methods of this disclosure have been described in relation to a PDU router 104, a buffer library 114, and a network communications system 101. However, to avoid unnecessarily obscuring the present disclosure, the preceding description omits a number of known structures and devices. This omission is not to be construed as a limitation of the scope of the claimed disclosure. Specific details are set forth to provide an understanding of the present disclosure. It should, however, be appreciated that the present disclosure may be practiced in a variety of ways beyond the specific detail set forth herein.

Furthermore, while the exemplary embodiments illustrated herein show the various components of the system collocated, certain components of the system can be located remotely, at distant portions of a distributed network, such as a LAN and/or the Internet, or within a dedicated system. Thus, it should be appreciated, that the components of the system can be combined into one or more devices, such as a server, communication device, or collocated on a particular node of a distributed network, such as an analog and/or digital telecommunications network, a packet-switched network, or a circuit-switched network. It will be appreciated from the preceding description, and for reasons of computational efficiency, that the components of the system can be arranged at any location within a distributed network of components without affecting the operation of the system.

Furthermore, it should be appreciated that the various links connecting the elements can be wired or wireless links, or any combination thereof, or any other known or later developed element(s) that is capable of supplying and/or communicating data to and from the connected elements. These wired or wireless links can also be secure links and may be capable of communicating encrypted information. Transmission media used as links, for example, can be any suitable carrier for electrical signals, including coaxial cables, copper wire, and fiber optics, and may take the form of acoustic or light waves, such as those generated during radio-wave and infra-red data communications.

While the flowcharts have been discussed and illustrated in relation to a particular sequence of events, it should be appreciated that changes, additions, and omissions to this sequence can occur without materially affecting the operation of the disclosed embodiments, configuration, and aspects.

A number of variations and modifications of the disclosure can be used. It would be possible to provide for some features of the disclosure without providing others.

In yet another embodiment, the systems and methods of this disclosure can be implemented in conjunction with a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein can be used to implement the various aspects of this disclosure. Exemplary hardware that can be used for the present disclosure includes computers, handheld devices, telephones (e.g., cellular, Internet enabled, digital, analog, hybrids, and others), and other hardware known in the art. Some of these devices include processors (e.g., a single or multiple microprocessors), memory, nonvolatile storage, input devices, and output devices. Furthermore, alternative software implementations including, but not limited to, distributed processing or component/object distributed processing, parallel processing, or virtual machine processing can also be constructed to implement the methods described herein.

In yet another embodiment, the disclosed methods may be readily implemented in conjunction with software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with this disclosure is dependent on the speed and/or efficiency requirements of the system, the particular function, and the particular software or hardware systems or microprocessor or microcomputer systems being utilized.

In yet another embodiment, the disclosed methods may be partially implemented in software that can be stored on a storage medium, executed on programmed general-purpose computer with the cooperation of a controller and memory, a special purpose computer, a microprocessor, or the like. In these instances, the systems and methods of this disclosure can be implemented as a program embedded on a personal computer such as an applet, JAVA^{®} or CGI script, as a resource residing on a server or computer workstation, as a routine embedded in a dedicated measurement system, system component, or the like. The system can also be implemented by physically incorporating the system and/or method into a software and/or hardware system.

Although the present disclosure describes components and functions implemented in the embodiments with reference to particular standards and protocols, the disclosure is not limited to such standards and protocols. Other similar standards and protocols not mentioned herein are in existence and are considered to be included in the present disclosure. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present disclosure.

The present disclosure, in various embodiments, configurations, and aspects, includes components, methods, processes, systems and/or apparatus substantially as depicted and described herein, including various embodiments, subcombinations, and subsets thereof. Those of skill in the art will understand how to make and use the systems and methods disclosed herein after understanding the present disclosure. The present disclosure, in various embodiments, configurations, and aspects, includes providing devices and processes in the absence of items not depicted and/or described herein or in various embodiments, configurations, or aspects hereof, including in the absence of such items as may have been used in previous devices or processes, e.g., for improving performance, achieving ease, and/or reducing cost of implementation.

The foregoing discussion of the disclosure has been presented for purposes of illustration and description. The foregoing is not intended to limit the disclosure to the form or forms disclosed herein. In the foregoing Detailed Description for example, various features of the disclosure are grouped together in one or more embodiments, configurations, or aspects for the purpose of streamlining the disclosure. The features of the embodiments, configurations, or aspects of the disclosure may be combined in alternate embodiments, configurations, or aspects other than those discussed above. This method of disclosure is not to be interpreted as reflecting an intention that the claimed disclosure requires more features than are expressly recited in each claim. Rather, as the following claims reflect, inventive aspects lie in less than all features of a single foregoing disclosed embodiment, configuration, or aspect. Thus, the following claims are hereby incorporated into this Detailed Description, with each claim standing on its own as a separate preferred embodiment of the disclosure.

Moreover, though the description of the disclosure has included description of one or more embodiments, configurations, or aspects and certain variations and modifications, other variations, combinations, and modifications are within the scope of the disclosure, e.g., as may be within the skill and knowledge of those in the art, after understanding the present disclosure. It is intended to obtain rights, which include alternative embodiments, configurations, or aspects to the extent permitted, including alternate, interchangeable and/or equivalent structures, functions, ranges, or steps to those claimed, whether or not such alternate, interchangeable and/or equivalent structures, functions, ranges, or steps are disclosed herein, and without intending to publicly dedicate any patentable subject matter.

Example aspects of the present disclosure may include an apparatus including: a layered communication architecture, a processor, a memory in electronic communication with the processor, and instructions stored in the memory. In some aspects, the layered communication architecture includes a first module and a second module. In some aspects, the instructions are executable by the processor to reserve, at the first module, a buffer in association with communicating a protocol data unit (PDU). In some aspects, the buffer is included in a set of buffers allocated in association with the first module.

In some aspects, the instructions are executable by the processor to provide, at the first module, the PDU to the second module. In some aspects, providing the PDU to the second module may include storing the PDU to the buffer and transferring ownership of the buffer to the second module.

In some aspects, the instructions are further executable by the processor to access, at the second module, the PDU from a memory space associated with the buffer. In some aspects, the instructions are further executable by the processor to release, at the second module, the ownership of the buffer based on successfully accessing the PDU.

In some aspects, the instructions executable by the processor to provide the PDU to the second module are further executable by the processor to provide, to the second module, pointer information indicating an address of the buffer. In some aspects, the instructions are further executable by the processor to provide, to the second module, an indication of valid data included in the buffer, where the valid data includes at least a portion of the PDU. In some aspects, the instructions are further executable by the processor to provide, to the second module, a combination of the pointer information and the indication of valid data.

In some aspects, the layered communication architecture further may include a router module. In some aspects, the first module is to transfer the ownership to the second module via the router module, provide the pointer information to the second module via the router module, provide the indication to the second module via the router module, or a combination thereof.

In some aspects, the instructions are further executable by the processor to identify, at the first module, a data type associated with the PDU, a data size of the PDU, or both. In some aspects, the set of buffers are associated with communicating a set of PDUs of the data type, the data size, or a combination thereof.

In some aspects, the instructions executable by the processor to reserve the buffer are further executable by the processor to acquire the ownership of the buffer from a buffer library. In some aspects, the set of buffers is included in the buffer library.

In some aspects, the layered communication architecture further includes a manager module that is to monitor reservation activity associated with the buffer, usage of the buffer, the ownership of the buffer, release of the buffer, temporal information associated with accessing the buffer, or any combination thereof.

In some aspects, the first module may include an upper-level module or a lower-level module of the layered communication architecture.

In some aspects, the second module may include an upper-level module or a lower-level module of the layered communication architecture.

In some aspects, the instructions are further executable by the processor to identify, at the first module, a data size associated with the PDU, a data type associated with the PDU, or a combination thereof. In some aspects, the instructions are further executable by the processor to reserve, at the first module, the buffer based on the data size, the data type, or a combination thereof.

In some aspects, a quantity of the set of buffers is equal to a maximum quantity of PDUs that are simultaneously receivable or transmittable at the first module.

In some aspects, the instructions are further executable by the processor to reserve, at the second module, a second buffer in association with communicating a second PDU. In some aspects, the second buffer is included in a second set of buffers allocated in association with the second module. In some aspects, the instructions are further executable by the processor to provide, at the second module, the second PDU to the first module. In some aspects, the instructions executable by the processor to provide the PDU to the first module are further executable by the processor to store the second PDU to the second buffer and transfer ownership of the second buffer to the first module.

In some aspects, the instructions are further executable by the processor to access, at the first module, the second PDU from a memory space associated with the second buffer. In some aspects, the instructions are further executable by the processor to release, at the first module, the ownership of the second buffer based on successfully accessing the second PDU.

In some aspects, the instructions are further executable by the processor to provide, at the second module, a second PDU to the first module via the buffer. In some aspects, the instructions executable by the processor to provide the second PDU to the first module are further executable by the processor to store the second PDU to the buffer and return the ownership of the buffer to the first module.

Example aspects of the present disclosure describe a method including reserving, at a first module included in a layered communication architecture, a buffer in association with communicating a protocol data unit (PDU). In some aspects, the buffer is included in a set of buffers allocated in association with the first module. In some aspects, the method includes providing, at the first module, the PDU to a second module included in the layered communication architecture. In some aspects, providing the PDU to the second module includes storing the PDU to the buffer and transferring ownership of the buffer to the second module.

The method further includes accessing, at the second module, the PDU from a memory space associated with the buffer. The method further includes releasing, at the second module, the ownership of the buffer based on successfully accessing the PDU.

The method further includes reserving, at the second module, a second buffer in association with communicating a second PDU. In some aspects, the second buffer is included in a second set of buffers allocated in association with the second module. The method further includes providing, at the second module, the second PDU to the first module. In some aspects, providing the second PDU to the first module includes storing the second PDU to the second buffer and transferring ownership of the second buffer to the first module. The method further includes accessing, at the first module, the second PDU from a memory space associated with the second buffer. The method further includes releasing, at the first module, the ownership of the second buffer based on successfully accessing the second PDU.

The method further includes providing, at the second module, a second PDU to the first module via the buffer. In some aspects, providing the second PDU to the first module includes storing the second PDU to the buffer and returning the ownership of the buffer to the first module. The method further includes accessing, at the first module, the second PDU from a memory space associated with the buffer. The method further includes releasing, at the first module, the ownership of the buffer based on successfully accessing the second PDU.

In some aspects, transferring ownership of the buffer to the second module includes providing, to the second module, pointer information indicating an address of the buffer. In some aspects, transferring ownership of the buffer to the second module includes providing, to the second module, an indication of valid data included in the buffer. In some aspects, the valid data includes at least a portion of the PDU. In some aspects, transferring ownership of the buffer to the second module includes providing, to the second module, a combination of the pointer information and the indication of valid data.

The method further includes identifying a data type associated with the PDU, a data size of the PDU, or a combination thereof. In some aspects, the set of buffers are associated with communicating a set of PDUs of the data type and/or the data size.

The phrases "at least one," "one or more," "or," and "and/or" are open-ended expressions that are both conjunctive and disjunctive in operation. For example, each of the expressions "at least one of A, B and C," "at least one of A, B, or C," "one or more of A, B, and C," "one or more of A, B, or C," "A, B, and/or C," and "A, B, or C" means A alone, B alone, C alone, A and B together, A and C together, B and C together, or A, B and C together.

The term "a" or "an" entity refers to one or more of that entity. As such, the terms "a" (or "an"), "one or more," and "at least one" can be used interchangeably herein. It is also to be noted that the terms "comprising," "including," and "having" can be used interchangeably.

The term "automatic" and variations thereof, as used herein, refers to any process or operation, which is typically continuous or semi-continuous, done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

Aspects of the present disclosure may take the form of an embodiment that is entirely hardware, an embodiment that is entirely software (including firmware, resident software, micro-code, etc.) or an embodiment combining software and hardware aspects that may all generally be referred to herein as a "circuit," "module," or "system." Any combination of one or more computer-readable medium(s) may be utilized. The computer-readable medium may be a computer-readable signal medium or a computer-readable storage medium.

A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer-readable storage medium may be any tangible medium that can contain or store a program for use by or in connection with an instruction execution system, apparatus, or device.

A computer-readable signal medium may include a propagated data signal with computer-readable program code embodied therein, for example, in baseband or as part of a carrier wave. Such a propagated signal may take any of a variety of forms, including, but not limited to, electro-magnetic, optical, or any suitable combination thereof. A computer-readable signal medium may be any computer-readable medium that is not a computer-readable storage medium and that can communicate, propagate, or transport a program for use by or in connection with an instruction execution system, apparatus, or device. Program code embodied on a computer-readable medium may be transmitted using any appropriate medium, including, but not limited to, wireless, wireline, optical fiber cable, RF, etc., or any suitable combination of the foregoing.

The terms "determine," "calculate," "compute," and variations thereof, as used herein, are used interchangeably and include any type of methodology, process, mathematical operation or technique.
The following aspects are preferred embodiments on the invention:
1. An apparatus comprising:
   a layered communication architecture including a first module and a second module;
   a processor;
   a memory in electronic communication with the processor; and
   instructions stored in the memory, the instructions being executable by the processor to:
      reserve, at the first module, a buffer in association with communicating a protocol data unit (PDU), wherein the buffer is included in a set of buffers allocated in association with the first module; and
      provide, at the first module, the PDU to the second module, wherein providing the PDU to the second module comprises:
         storing the PDU to the buffer; and
         transferring ownership of the buffer to the second module.
2. The apparatus of aspect 1, wherein the instructions are further executable by the processor to:
   access, at the second module, the PDU from a memory space associated with the buffer; and
   release, at the second module, the ownership of the buffer based on successfully accessing the PDU.
3. The apparatus of aspect 1, wherein the instructions executable by the processor to provide the PDU to the second module are further executable by the processor to provide, to the second module:
   pointer information indicating an address of the buffer;
   an indication of valid data included in the buffer, wherein the valid data includes at least a portion of the PDU; or
   a combination thereof.
4. The apparatus of aspect 3, wherein the layered communication architecture further comprises a router module, and
   wherein the first module is to transfer the ownership to the second module via the router module, provide the pointer information to the second module via the router module, provide the indication to the second module via the router module, or a combination thereof.
5. The apparatus of aspect 1, wherein the instructions are further executable by the processor to:
   identify, at the first module, a data type associated with the PDU, a data size of the PDU, or both,
   wherein the set of buffers are associated with communicating a set of PDUs of the data type, the data size, or a combination thereof.
6. The apparatus of aspect 1, wherein:
   the instructions executable by the processor to reserve the buffer are further executable by the processor to acquire the ownership of the buffer from a buffer library; and
   the set of buffers is included in the buffer library.
7. The apparatus of aspect 1, wherein the layered communication architecture further comprises a manager module that is to monitor reservation activity associated with the buffer, usage of the buffer, the ownership of the buffer, release of the buffer, temporal information associated with accessing the buffer, or any combination thereof.
8. The apparatus of aspect 1, wherein the first module comprises an upper-level module or a lower-level module of the layered communication architecture.
9. The apparatus of aspect 1, wherein the second module comprises an upper-level module or a lower-level module of the layered communication architecture.
10. The apparatus of aspect 1, wherein the instructions are further executable by the processor to:
   identify, at the first module, a data size associated with the PDU, a data type associated with the PDU, or a combination thereof; and
   reserve, at the first module, the buffer based on the data size, the data type, or a combination thereof.
11. The apparatus of aspect 1, wherein a quantity of the set of buffers is equal to a maximum quantity of PDUs that are simultaneously receivable or transmittable at the first module.
12. The apparatus of aspect 1, wherein the instructions are further executable by the processor to:
   reserve, at the second module, a second buffer in association with communicating a second PDU, wherein the second buffer is included in a second set of buffers allocated in association with the second module; and
   provide, at the second module, the second PDU to the first module, wherein the instructions executable by the processor to provide the PDU to the first module are further executable by the processor to:
      store the second PDU to the second buffer; and
      transfer ownership of the second buffer to the first module.
13. The apparatus of aspect 12, wherein the instructions are further executable by the processor to:
   access, at the first module, the second PDU from a memory space associated with the second buffer; and
   release, at the first module, the ownership of the second buffer based on successfully accessing the second PDU.
14. The apparatus of aspect 1, wherein the instructions are further executable by the processor to provide, at the second module, a second PDU to the first module via the buffer, wherein the instructions executable by the processor to provide the second PDU to the first module are further executable by the processor to:
   store the second PDU to the buffer; and
   return the ownership of the buffer to the first module.
15. A method comprising:
   reserving, at a first module included in a layered communication architecture, a buffer in association with communicating a protocol data unit (PDU), wherein the buffer is included in a set of buffers allocated in association with the first module; and
   providing, at the first module, the PDU to a second module included in the layered communication architecture, wherein providing the PDU to the second module comprises:
      storing the PDU to the buffer; and
      transferring ownership of the buffer to the second module.
16. The method of aspect 15, further comprising:
   accessing, at the second module, the PDU from a memory space associated with the buffer; and
   releasing, at the second module, the ownership of the buffer based on successfully accessing the PDU.
17. The method of aspect 15, further comprising:
   reserving, at the second module, a second buffer in association with communicating a second PDU, wherein the second buffer is included in a second set of buffers allocated in association with the second module;
   providing, at the second module, the second PDU to the first module, wherein providing the second PDU to the first module comprises:
      storing the second PDU to the second buffer; and
      transferring ownership of the second buffer to the first module;
   accessing, at the first module, the second PDU from a memory space associated with the second buffer; and
   releasing, at the first module, the ownership of the second buffer based on successfully accessing the second PDU.
18. The method of aspect 15, further comprising:
   providing, at the second module, a second PDU to the first module via the buffer, wherein providing the second PDU to the first module comprises:
      storing the second PDU to the buffer; and
      returning the ownership of the buffer to the first module;
   accessing, at the first module, the second PDU from a memory space associated with the buffer; and
   releasing, at the first module, the ownership of the buffer based on successfully accessing the second PDU.
19. The method of aspect 15, wherein transferring ownership of the buffer to the second module comprises providing, to the second module:
   pointer information indicating an address of the buffer;
   an indication of valid data included in the buffer, wherein the valid data includes at least a portion of the PDU; or
   a combination thereof.
20. The method of aspect 15, further comprising:
   identifying a data type associated with the PDU, a data size of the PDU, or a combination thereof,
   wherein the set of buffers are associated with communicating a set of PDUs of the data type, the data size, or a combination thereof.

## Claims

1. An apparatus comprising:
a layered communication architecture including a first module and a second module;
a processor;
a memory in electronic communication with the processor; and
instructions stored in the memory, the instructions being executable by the processor to:
reserve, at the first module, a buffer in association with communicating a protocol data unit (PDU), wherein the buffer is included in a set of buffers allocated in association with the first module; and
provide, at the first module, the PDU to the second module, wherein providing the PDU to the second module comprises:
storing the PDU to the buffer; and
transferring ownership of the buffer to the second module.

2. The apparatus of claim 1, wherein the instructions are further executable by the processor to:
access, at the second module, the PDU from a memory space associated with the buffer; and
release, at the second module, the ownership of the buffer based on successfully accessing the PDU.

3. The apparatus of claim 1 or 2, wherein the instructions executable by the processor to provide the PDU to the second module are further executable by the processor to provide, to the second module:
pointer information indicating an address of the buffer;
an indication of valid data included in the buffer, wherein the valid data includes at least a portion of the PDU; or
a combination thereof, preferably
wherein the layered communication architecture further comprises a router module, and
wherein the first module is to transfer the ownership to the second module via the router module, provide the pointer information to the second module via the router module, provide the indication to the second module via the router module, or a combination thereof.

4. The apparatus of any one of claims 1 to 3, wherein the instructions are further executable by the processor to:
identify, at the first module, a data type associated with the PDU, a data size of the PDU, or both,
wherein the set of buffers are associated with communicating a set of PDUs of the data type, the data size, or a combination thereof.

5. The apparatus of any one of claims 1 to 4, wherein:
the instructions executable by the processor to reserve the buffer are further executable by the processor to acquire the ownership of the buffer from a buffer library; and
the set of buffers is included in the buffer library.

6. The apparatus of any one of claims 1 to 5, wherein the layered communication architecture further comprises a manager module that is to monitor reservation activity associated with the buffer, usage of the buffer, the ownership of the buffer, release of the buffer, temporal information associated with accessing the buffer, or any combination thereof.

7. The apparatus of any one of claims 1 to 6, wherein the first module comprises an upper-level module or a lower-level module of the layered communication architecture,
and/or
wherein the second module comprises an upper-level module or a lower-level module of the layered communication architecture.

8. The apparatus of any one of claims 1 to 7, wherein the instructions are further executable by the processor to:
identify, at the first module, a data size associated with the PDU, a data type associated with the PDU, or a combination thereof; and
reserve, at the first module, the buffer based on the data size, the data type, or a combination thereof,
and/or
wherein a quantity of the set of buffers is equal to a maximum quantity of PDUs that are simultaneously receivable or transmittable at the first module.

9. The apparatus of any one of claims 1 to 8, wherein the instructions are further executable by the processor to:
reserve, at the second module, a second buffer in association with communicating a second PDU, wherein the second buffer is included in a second set of buffers allocated in association with the second module; and
provide, at the second module, the second PDU to the first module, wherein the instructions executable by the processor to provide the PDU to the first module are further executable by the processor to:
store the second PDU to the second buffer; and
transfer ownership of the second buffer to the first module.

10. The apparatus of claim 9, wherein the instructions are further executable by the processor to:
access, at the first module, the second PDU from a memory space associated with the second buffer; and
release, at the first module, the ownership of the second buffer based on successfully accessing the second PDU.

11. The apparatus of any one of claims 1 to 10, wherein the instructions are further executable by the processor to provide, at the second module, a second PDU to the first module via the buffer, wherein the instructions executable by the processor to provide the second PDU to the first module are further executable by the processor to:
store the second PDU to the buffer; and
return the ownership of the buffer to the first module.

12. A method comprising:
reserving, at a first module included in a layered communication architecture, a buffer in association with communicating a protocol data unit (PDU), wherein the buffer is included in a set of buffers allocated in association with the first module; and
providing, at the first module, the PDU to a second module included in the layered communication architecture, wherein providing the PDU to the second module comprises:
storing the PDU to the buffer; and
transferring ownership of the buffer to the second module,
the method preferably, further comprising:
accessing, at the second module, the PDU from a memory space associated with the buffer; and
releasing, at the second module, the ownership of the buffer based on successfully accessing the PDU.

13. The method of claim 12, further comprising:
reserving, at the second module, a second buffer in association with communicating a second PDU, wherein the second buffer is included in a second set of buffers allocated in association with the second module;
providing, at the second module, the second PDU to the first module, wherein providing the second PDU to the first module comprises:
storing the second PDU to the second buffer; and
transferring ownership of the second buffer to the first module;
accessing, at the first module, the second PDU from a memory space associated with the second buffer; and
releasing, at the first module, the ownership of the second buffer based on successfully accessing the second PDU.

14. The method of any one of claims 12 to 13, further comprising:
providing, at the second module, a second PDU to the first module via the buffer, wherein providing the second PDU to the first module comprises:
storing the second PDU to the buffer; and
returning the ownership of the buffer to the first module;
accessing, at the first module, the second PDU from a memory space associated with the buffer; and
releasing, at the first module, the ownership of the buffer based on successfully accessing the second PDU;
and/or
wherein transferring ownership of the buffer to the second module comprises providing, to the second module:
pointer information indicating an address of the buffer;
an indication of valid data included in the buffer, wherein the valid data includes at least a portion of the PDU; or
a combination thereof.

15. The method of any one of claims 12 to 14, further comprising:
identifying a data type associated with the PDU, a data size of the PDU, or a combination thereof,
wherein the set of buffers are associated with communicating a set of PDUs of the data type, the data size, or a combination thereof.
